# EUROPEAN PATENT APPLICATION

(11) **EP 4 800 993 A1**
(43) Date of publication of application: **02.09.2026**
(21) Application number: 24881068.1
(22) Date of filing: 24.06.2024
(51) Int. Cl.: H04L 41/08, H04L 41/0866

(54) **RDMA NETWORK CONFIGURATION METHOD, AND SERVER**

(30) Priority: 26.10.2023 CN 202311405959
(71) Applicant: xFusion Digital Technologies Co., Ltd., Henan 450000 (CN)
(72) Inventor: ZHANG, Biaowen, Zhengzhou, Henan 450000 (CN)
(74) Representative: Isarpatent
(86) International application number: PCT/CN2024/101090
(87) International publication number: WO 2025/086691

(57) **Abstract**

Embodiments of the present application disclose an RDMA network configuration method and a server, and relate to the field of servers. In the method, when an RDMA network needs to be configured, a configuration device may obtain network configuration information of a plurality of target servers, and automatically determine whether the network configuration information of the plurality of target servers satisfies an RDMA network configuration condition, and when the network configuration information of the plurality of target servers satisfies the RDMA network configuration condition, send a configuration instruction to instruct configuration of the RDMA network for the plurality of target servers. During a network configuration process, the network configuration information of the plurality of target servers does not need to be manually obtained and whether the network configuration information of the plurality of target servers satisfies the RDMA network configuration condition does not need to be manually determined. Therefore, the solution of the present application may improve efficiency of obtaining the network configuration information and accuracy of determining whether the network configuration information satisfies the RDMA network configuration condition, thereby reducing a risk of an RDMA network configuration failure.

## Description

This application claims priority to Chinese Patent Application No. 202311405959.9 filed with the China National Intellectual Property Administration on October 26, 2023, entitled "RDMA NETWORK CONFIGURATION METHOD AND SERVER", which is incorporated herein by reference in its entirety.

### TECHNICAL FIELD

The present application relates to the field of server technologies, and in particular to an RDMA network configuration method and a server.

### BACKGROUND

In order to improve data transmission efficiency among different servers, a remote direct memory access (remote direct memory access, RDMA) technology is proposed in related art. When network interface cards (network interface cards, NICs) on two servers are configured with an RDMA network, one server may directly access a storage device on the other server based on the RDMA network.

However, in the related art, a process of configuring the RDMA network for network interface cards on different servers is completely manually performed, which not only results in low efficiency but also leads to a high risk of a network configuration failure due to human errors.

### SUMMARY

Embodiments of the present application provide an RDMA network configuration method and a server, to help improve network configuration efficiency and reduce a risk of a network configuration failure.

In order to achieve the above purpose, the embodiments of the present application adopt the following technical solutions:

According to a first aspect, an RDMA network configuration method is provided, and is applied to a configuration device. The method includes: obtaining network configuration information of a plurality of target servers; determining a check result of the network configuration information of the plurality of target servers, where the check result is configured to indicate that the network configuration information satisfies an RDMA network configuration condition or does not satisfy an RDMA network configuration condition; and in a case where the check result indicates that the RDMA network configuration condition is satisfied, sending a network configuration instruction, where the network configuration instruction is configured to instruct configuration of an RDMA network for the plurality of target servers.

In the solution, when the RDMA network needs to be configured, the configuration device may obtain the network configuration information of the plurality of target servers, and automatically determine whether the network configuration information of the plurality of target servers satisfies the RDMA network configuration condition. When the network configuration information of the plurality of target servers satisfies the RDMA network configuration condition, the configuration device sends the configuration instruction to instruct configuration of the RDMA network for the plurality of target servers. During a network configuration process, the configuration device may automatically obtain the network configuration information of the plurality of target servers, and automatically determine whether the network configuration information of the plurality of target servers satisfies the RDMA network configuration condition, without necessarily manually obtaining the network configuration information of the plurality of target servers and manually determining whether the network configuration information of the plurality of target servers satisfies the RDMA network configuration condition. Therefore, not only efficiency of obtaining the network configuration information and determining whether the network configuration information satisfies the RDMA network configuration condition can be improved, but also accuracy of determining whether the network configuration information satisfies the RDMA network configuration condition can be enhanced, and further a risk of an RDMA network configuration failure can be reduced. In addition, in a case where the check result indicates that the network configuration information satisfies the RDMA network configuration condition, the network configuration instruction is sent to instruct configuration of the RDMA network for the plurality of target servers, thereby enhancing efficiency of configuring the RDMA network for the plurality of target servers.

In a possible implementation, the configuration device stores a target set, and network configuration information in the target set indicates that the RDMA network is supported; and determining the check result of the network configuration information of the plurality of target servers includes: in a case where the network configuration information of the plurality of target servers is the same, and the network configuration information of the plurality of target servers belongs to the target set, determining that the check result indicates that the RDMA network configuration condition is satisfied.

In this implementation, the network configuration information (that is, the target set) supporting the RDMA network is pre-stored, so that after the network configuration information of the plurality of target servers is obtained, not only whether the network configuration information of the plurality of target servers is the same may be automatically determined, but also whether the network configuration information of the plurality of target servers indicates that the RDMA network is supported may be automatically determined, thereby improving efficiency of determining whether the network configuration information satisfies the RDMA network configuration condition.

In another possible implementation, the network configuration information includes a network interface card model, and the target set includes a first set, each network interface card model in the first set indicating that an RDMA network is supported; and in a case where the network configuration information of the plurality of target servers is the same, and the network configuration information of the plurality of target servers belongs to the target set, determining that the check result indicates that the RDMA network configuration condition is satisfied, includes: in a case where network interface card models of the plurality of target servers are the same, and the network interface card models of the plurality of target servers belong to the first set, determining that the check result indicates that the RDMA network configuration condition is satisfied.

In this implementation, the network configuration information is configured to include the network interface card model, and each network interface card model in the first set indicates that the RDMA network is supported, so that whether the network interface card models of the plurality of target servers are the same and whether the network interface card models of the plurality of target servers indicate that the RDMA network is supported may be automatically determined, thereby improving efficiency and accuracy of determining whether the network interface card model satisfies the RDMA network configuration condition and further improving efficiency of configuring the RDMA network.

In another possible implementation, obtaining the network configuration information of the plurality of target servers includes: obtaining first network interface card information through a central processing unit of the target server, where the first network interface card information includes first network interface card four-tuple information; obtaining second network interface card information through an out-of-band controller of the target server, where the second network interface card information includes second network interface card four-tuple information and a target network interface card model; and in a case where the first network interface card four-tuple information is the same as the second network interface card four-tuple information, determining that a model of a network interface card corresponding to the first network interface card four-tuple information is the target network interface card model.

In this implementation, a specific implementation for determining the network interface card model is provided. Specifically, the configuration device may automatically determine a network interface card model of each network interface card of the target server by comparing the first network interface card information (that is, in-band network interface card information) provided by the central processing unit of the target server with the second network interface card information (that is, out-of-band network interface card information) provided by the out-of-band controller of the target server, thereby improving efficiency of determining the network interface card model.

In another possible implementation, the network configuration information includes an operating system version number, the target set includes a second set, and each operating system version number in the second set indicates that the RDMA network is supported; and in a case where the network configuration information of the plurality of target servers is the same, and the network configuration information of the plurality of target servers belongs to the target set, determining that the check result indicates that the RDMA network configuration condition is satisfied, includes: in a case where operating system version numbers of the plurality of target servers are the same, and the operating system version numbers of the plurality of target servers belong to the second set, determining that the check result indicates that the RDMA network configuration condition is satisfied.

In this implementation, the network configuration information is configured to include an operating system model, and each operating system model in the second set indicates that the RDMA network is supported, so that whether the network interface card models of the plurality of target servers are the same and whether the network interface card models of the plurality of target servers indicate that the RDMA network is supported may be automatically determined, thereby improving efficiency and accuracy of determining whether the operating system model satisfies the RDMA network configuration condition and further improving efficiency of configuring the RDMA network.

In another possible implementation, determining the check result of the network configuration information of the plurality of target servers includes: in a case where the network configuration information of the plurality of target servers is the same, determining that the check result indicates that the RDMA network configuration condition is satisfied.

In another possible implementation, the network configuration information includes a network interface card model; in a case where the network configuration information of the plurality of target servers is the same, determining that the check result indicates that the RDMA network configuration condition is satisfied, includes: in a case where network interface card models of different target servers among the plurality of target servers are the same, determining that the check result indicates that the RDMA network configuration condition is satisfied.

In another possible implementation, the network configuration information includes an operating system version number; in a case where the network configuration information of the plurality of target servers is the same, determining that the check result indicates that the RDMA network configuration condition is satisfied, includes: in a case where operating system version numbers of different target servers among the plurality of target servers are the same, determining that the check result indicates that the RDMA network configuration condition is satisfied.

In another possible implementation, the configuration device stores a target set, and network configuration information in the target set indicates that the RDMA network is supported; and determining the check result of the network configuration information of the plurality of target servers includes: in a case where the network configuration information of the plurality of target servers belongs to the target set, determining that the check result indicates that the RDMA network configuration condition is satisfied.

In another possible implementation, the network configuration information includes a network interface card model, and the target set includes a first set, each network interface card model in the first set indicating that the RDMA network is supported; and in a case where the network configuration information of the plurality of target servers is the same, determining that the check result indicates that the RDMA network configuration condition is satisfied, includes: in a case where network interface card models of the plurality of target servers belong to the first set, determining that the check result indicates that the RDMA network configuration condition is satisfied.

In another possible implementation, the network configuration information includes an operating system version number, the target set includes a second set, and each operating system version number in the second set indicates that the RDMA network is supported; and in a case where the network configuration information of the plurality of target servers is the same, determining that the check result indicates that the RDMA network configuration condition is satisfied, includes: in a case where operating system version numbers of the plurality of target servers belong to the second set, determining that the check result indicates that the RDMA network configuration condition is satisfied.

In another possible implementation, the method further includes: obtaining third network interface card information of a plurality of first servers; based on the third network interface card information of the plurality of first servers, determining a plurality of second servers from the plurality of first servers, where third network interface card information of the plurality of second servers satisfies the RDMA network configuration condition; and determining the plurality of target servers from the plurality of second servers.

In this implementation, before the network configuration information of the plurality of target servers is obtained, third network interface card information of a plurality of first servers in a cluster is first obtained, and a plurality of second servers whose third network interface card information satisfies the RDM configuration condition are selected from the plurality of first servers, and then a plurality of target servers are determined from the plurality of second servers. This helps ensure that the third network interface card information of the plurality of target servers in the check result satisfies the RDMA network configuration condition, thereby improving reliability and stability of an RDMA network established for the plurality of target servers.

In another possible implementation, the third network interface card information of the plurality of first servers includes one or more of network interface card connection statuses, quantities of network interface cards, quantities of ports of a single network interface card, or network interface card port rates. The network interface card connection statuses of the plurality of first servers includes being physically connected or not being connected to a physical switch. Satisfying the RDMA network configuration condition includes one or more of the network interface card connection statuses being connected to the physical switch, the quantities of the network interface cards being the same, the quantities of ports of the single network interface cards being the same, or the network interface card port rates being the same.

In another possible implementation, the method further includes: obtaining device information of the plurality of second servers, where the device information includes one or more of a device serial number, a universally unique identifier (UUID), a device model, or an IP address of a baseboard management controller (BMC); and displaying a first interface, where the first interface includes a first control, the first control being configured to instruct display of the device information of the plurality of second servers.

In this implementation, the device information of the plurality of second servers is obtained, and the device information of the plurality of second servers is displayed on the first interface, so as to provide a user with a server whose third network interface card information satisfies the RDMA network configuration condition. In this way, the user may select, from the server whose third network interface card information satisfies the RDMA network configuration condition, a server for configuring the RDMA network, which not only helps improve user experience, but also helps increase a probability that the check result indicates that the RDMA network configuration condition is satisfied.

In another possible implementation, determining the plurality of target servers from the plurality of second servers includes: in response to a first trigger operation on the first interface, determining the plurality of target servers from the plurality of second servers. The first trigger operation instructs determining at least some selected ones of the plurality of second servers to be the plurality of target servers.

In this implementation, a specific implementation for determining the plurality of target servers is provided. Specifically, the plurality of target servers may be selected by the user from the plurality of second servers, thereby improving flexibility of network configuration.

In another possible implementation, determining the check result of the network configuration information of the plurality of target servers includes: in response to a second trigger operation on the first interface, displaying a second interface; where the second interface includes a second control, and the second control is configured to instruct display of a check item corresponding to the check result; and in response to a third trigger operation on the second interface, based on the check item displayed as instructed by the second control, determining the check result of the network configuration information of the plurality of target servers.

In this implementation, the check item corresponding to the check result is displayed on the second interface, so that the user can understand the check item performed on the network configuration information of the plurality of target servers, thereby helping ensure accuracy of the RDMA network configuration condition and user experience.

In another possible implementation, the second interface may further include a set control, and the set control is configured to instruct display of content of the target set. This helps the user understand network configuration information that supports the RDMA network.

In another possible implementation, determining the check result of the network configuration information of the plurality of target servers includes: determining at least some of target servers from the plurality of target servers; where network configuration information of different target servers among the at least some of target servers is the same; and in a case where the network configuration information of the at least some of target servers belongs to the target set, determining that the check result indicates that the RDMA network configuration condition is satisfied.

In another possible implementation, determining the check result of the network configuration information of the plurality of target servers includes: determining at least some of target servers from the plurality of target servers; where network configuration information of the at least some of target servers belongs to the target set; and in a case where the network configuration information of the at least some of target servers is the same, determining that the check result indicates that the RDMA network configuration condition is satisfied.

In another possible implementation, determining the check result of the network configuration information of the plurality of target servers includes: determining at least some of target servers from the plurality of target servers; where network configuration information of different target servers among the at least some of target servers is the same, and the network configuration information of the at least some of target servers belongs to the target set; and determining that the check result indicates that the RDMA network configuration condition is satisfied.

In another possible implementation, the network configuration information includes a network interface card model and/or an operating system version number.

In another possible implementation, in a case where the check result indicates that the RDMA network configuration condition is satisfied, sending the network configuration instruction includes: in a case where the check result indicates that the RDMA network configuration condition is satisfied, obtaining configuration information of a distributed switch; where the configuration information of the distributed switch includes enabling the RDMA network; and sending a network configuration instruction, where the network configuration instruction includes the configuration information of the distributed switch, the network configuration instruction being configured to instruct creation of the distributed switch for the plurality of target servers based on the configuration information of the distributed switch.

In this implementation, when the check result is configured to indicate that the RDMA network configuration condition is satisfied, the configuration information of the distributed switch is obtained, and the network instruction including the configuration information of the distributed switch is sent to a management server, thereby instructing the management server to automatically create the distributed switch for the plurality of target servers. Compared with creating the distributed switch by the user, this helps improve efficiency of creating the distributed switch.

In another possible implementation, in a case where the check result indicates that the RDMA network configuration condition is satisfied, obtaining the configuration information of the distributed switch includes: in a case where the check result indicates that the RDMA network configuration condition is satisfied, displaying a third interface, where the third interface includes a third control, the third control being configured to instruct display of the configuration information of the distributed switch; and based on the third control on the third interface, obtaining the configuration information of the distributed switch.

In this implementation, the configuration information of the distributed switch is obtained by using the third control on the third interface. In this way, the user may provide the configuration information of the distributed switch for the configuration device through the third interface, so that a process of obtaining the distributed switch is visualized, thereby helping improve the user experience.

In another possible implementation, the third control includes a network control, the network control being configured to instruct display of a network type of a network interface card connected to the distributed switch, and the network control instructing enabling of the RDMA network and disabling of an LACP network.

In another possible implementation, the third control includes a network control, the network control being configured to instruct display of a network type of a network interface card connected to the distributed switch, and the network control instructing enabling of the RDMA network.

In another possible implementation, the third control includes a network control, the network control being configured to instruct display of a network type of a network interface card connected to the distributed switch, and the network control instructing disabling of an LACP network.

In this implementation, the network control on the third interface is configured to instruct disabling of the LACP network, so as to prevent the user from selecting an incorrect network type due to an erroneous operation, thereby improving accuracy of the distributed switch created based on the configuration information.

In another possible implementation, the configuration information of the distributed switch further includes route not based on IP hash; and the third control includes a policy control, the policy control being configured to instruct display of a load balancing policy of the distributed switch, and the policy control instructing the route not based on IP hash, and not supporting selecting route based on IP hash.

In another possible implementation, the configuration information of the distributed switch further includes route not based on IP hash; and the third control includes a policy control, the policy control being configured to instruct display of a load balancing policy of the distributed switch, and the policy control instructing the route not based on IP hash.

In another possible implementation, the configuration information of the distributed switch further includes route not based on IP hash; and the third control includes a policy control, the policy control being configured to instruct display of a load balancing policy of the distributed switch, and the policy control not supporting selecting route based on IP hash.

In this implementation, the policy control is configured not to support selecting the route based on IP hash, so as to prevent the user from selecting an incorrect load balancing policy due to an erroneous operation, thereby further improving accuracy of the distributed switch created based on the configuration information.

In another possible implementation, the configuration information of the distributed switch includes an identifier of the distributed switch, an identifier of each uplink, a network interface card identifier and a network port identifier corresponding to each uplink, an identifier of each port group of the distributed switch, and a virtual machine identifier corresponding to each port group.

In another possible implementation, the method further includes: displaying a fourth interface; where the fourth interface includes a fourth control, the fourth control being configured to instruct display of the check result.

In this implementation, the fourth interface is configured to be displayed. The fourth interface includes the fourth control, the fourth control being configured to instruct display of the check result, thereby helping the user understand in a timely and accurate manner whether the network configuration information of the plurality of target servers satisfies the RDMA network configuration condition, thereby helping improve the user experience.

In another possible implementation, the fourth interface may further include a fifth control, the fifth control being configured to instruct display of the network configuration information of the plurality of target servers.

In this implementation, the fourth interface is configured to further include the fifth control, the fifth control being configured to instruct display of the network configuration information of the plurality of target servers, thereby helping the user understand the network configuration information of the plurality of target servers and further improving the user experience.

According to a second aspect, an RDMA network configuration apparatus is provided. The apparatus includes a functional unit for performing any one method as described in the first aspect, and an action performed by each functional unit is implemented by hardware or by hardware executing corresponding software. For example, the network configuration apparatus may include an obtaining unit, a determining unit, and a sending unit. The obtaining unit is configured to obtain network configuration information of a plurality of target servers; the determining unit is configured to determine a check result of the network configuration information of the plurality of target servers, where the check result is configured to indicate that an RDMA network configuration condition is satisfied or an RDMA network configuration condition is not satisfied; and the sending unit is configured to, in a case where the check result indicates that the RDMA network configuration condition is satisfied, send a network configuration instruction, where the network configuration instruction is configured to instruct configuration of an RDMA network for the plurality of target servers.

According to a third aspect, a server is provided, and includes a processor and a memory, where the processor is connected to the memory; the memory stores a computer program, and when the processor executes the computer program stored in the memory, the server implements any method provided in the first aspect.

According to a fourth aspect, a cluster system is provided, and includes a configuration device, a plurality of target servers, and a management server; where the plurality of target servers send network configuration information of the plurality of target servers to the configuration device; the configuration device receives the network configuration information of the plurality of target servers; the configuration device determines a check result of the network configuration information of the plurality of target servers; the check result is configured to indicate that an RDMA network configuration condition is satisfied or an RDMA network configuration condition is not satisfied; in a case where the check result indicates that the RDMA network configuration condition is satisfied, the configuration device sends a network configuration instruction to the management server, where the network configuration instruction is configured to instruct configuration of an RDMA network for the plurality of target servers; and the management server, in response to the received network configuration instruction, configures the RDMA network for the plurality of target servers.

In the fourth aspect, the configuration device may be further configured to perform any possible implementation in the first aspect mentioned above.

According to a fifth aspect, a chip is provided, and includes a processor and an interface circuit, where the interface circuit is configured to receive a code instruction and transmit the code instruction to the processor, and the processor is configured to run the code instruction to perform any one method according to the first aspect.

According to a sixth aspect, a chip is provided, and includes a processor and an interface circuit, where the interface circuit is configured to receive a code instruction and transmit the code instruction to the processor, and the processor is configured to run the code instruction to perform any one method according to the third aspect.

According to a seventh aspect, a computer-readable storage medium storing a computer-executable instruction is provided. When the computer-executable instruction runs on a server, the server is caused to perform any one method according to the first aspect.

According to an eighth aspect, a computer program product including a computer-executable instruction is provided. When the computer-executable instruction runs on a server, the server is caused to perform any one method according to the first aspect.

For technical effects brought by any of the implementations in the second aspect to the eighth aspect, reference may be made to technical effects brought by different implementations in the first aspect, the second aspect, and the third aspect, and details are not repeated here.

### BRIEF DESCRIPTION OF DRAWINGS

FIG. 1 is a schematic diagram illustrating a system architecture according to an embodiment of the present application;
FIG. 2 is a flowchart illustrating a network configuration method according to an embodiment of the present application;
FIG. 3 is a schematic diagram illustrating a first interface according to an embodiment of the present application;
FIG. 4 is a schematic diagram illustrating a second interface according to an embodiment of the present application;
FIG. 5 is a schematic diagram illustrating a fourth interface according to an embodiment of the present application;
FIG. 6 is a schematic diagram illustrating a third interface according to an embodiment of the present application;
FIG. 7 is an interaction schematic diagram illustrating a network configuration method according to an embodiment of the present application;
FIG. 8 is a schematic diagram illustrating a network configuration method according to an embodiment of the present application; and
FIG. 9 is a schematic diagram illustrating a network configuration apparatus according to an embodiment of the present application.

### DESCRIPTION OF EMBODIMENTS

The technical solutions of embodiments of the present application will be described below in combination with accompanying drawings.

In description of the present application, unless otherwise specified, "/" indicates that associated objects are in an "or" relationship. For example, A/B may represent A or B. In the application, "and/or" describes only an association relationship between the associated objects, and represents that three relationships may exist. For example, A and/or B may represent the following three cases: only A exists, both A and B exist, and only B exists, where A and B can be singular or plural.

Furthermore, unless otherwise specified in the description of the present application, "a plurality of" represents two or more. "At least one" or similar expressions represent any combination of these items, including any combination of single or plural items. For example, at least one of a, b, or c may represent a, b, c, a-b, a-c, b-c, or a-b-c, where each of a, b, and c may be singular or plural.

In addition, in order to clearly describe the technical solutions in the embodiments of the present application, terms such as "first" and "second" in the embodiments of the present application are used to differentiate identical or similar items that have basically the same functions and purposes. Those skilled in the art may understand that the terms such as "first" and "second" do not limit a quantity or an execution order, and the terms such as "first" and "second" do not mean being definitely different. Besides, in the embodiments of the present application, the terms "exemplary" or "for example" are used to mean examples, illustrations, or descriptions. Any embodiment or design described in the embodiments of the present application as "exemplary" or "for example" should not be explained as being preferred or advantageous compared to other embodiments or designs. Specifically, the use of terms such as "exemplary" or "for example" is intended to present relevant concepts in a concrete way for ease of understanding.

The following provides a brief introduction to the terms involved in embodiments of the present application.

VMware vSphere, short for vSphere, is a data center virtualization suite including an ESXi bare metal hypervisor and a vCenter Server management platform.

VMware ESXi, short for ESXi, is a virtualization operating system (OS), that is, a bare metal hypervisor that can be directly installed on a server to create a virtual machine.

VMware vCenter Server, short for vCenter or vCenter serves, is virtual machine management software that can be used to manage an ESXi host and a virtual machine on the ESXi host. The ESXi host refers to a server where the EXSi OS is installed.

VMware Virtual SAN, short for vSAN (virtual storage area network), is a distributed storage architecture based on an ESXi core.

Remote direct memory access (remote direct memory access, RDMA) is a technology that bypasses the server's operating system and directly accesses data in the server's memory. That is, the RDMA may provide direct memory access from a memory of one server to a memory of another server without involving operating systems or processors of the two servers.

Simple service discovery protocol (simple service discovery protocol, SSDP) is an application layer protocol, which is one of core protocols of a universal plug and play (UPnP) technology. The SSDP provides a mechanism for discovering a device in a local area network. A control point (that is, a client that receives services, which may be referred to as an SSDP client or SSDP agent) may use the SSDP to discover a device that provides specific services in a local area network where the control point is located based on its requirement. The device (that is, a server that provides services, which may be referred to as an SSDP server) may use the SSDP to advertise its presence to the control point in the local area network where the device is located.

Software defined computing (software defined computing, SDC) is a software-based computing architecture that abstracts configuration, management, and control of computing resources from hardware so that the computing resources may be flexibly adjusted and allocate as required. The software defined computing technology visualizes and centrally manages the computing resources to achieve efficient utilization and flexible allocation of the resources, thereby improving computing efficiency and application responsiveness.

Software-defined networking (software defined network, SDN) is a software-based network architecture that abstracts configuration, management, and control of network resources from hardware so as to manage the entire network through software.

Software-defined storage (Software Defined Storage, SDS) is a software-based storage architecture that abstracts configuration, management, and control of storage resources from hardware so as to manage software through software.

The following describes application scenarios of the embodiments of the present application.

In order to satisfy user requirements, provide better services for the user, and allocate resources effectively, hyper converged infrastructure (Hyper Converged Infrastructure, HCI) is proposed in the related art. The HCI mainly includes software defined computing (also known as server virtualization), software-defined networking, software-defined storage, and high performance Ethernet. The high performance Ethernet is used for communication between servers and communication between a server and a storage device.

In the hyper converged infrastructure, the software-defined storage uses vSAN. vSAN serves as a distributed software layer of ESXi to achieve storage functions in the hyper converged architecture. In addition, vSAN may further aggregate direct-attached storage of all servers in the hyper converged infrastructure to create and share a single storage pool. The single storage pool may use SSDs as a cache and HDDs for storage to improve a storage speed and reduce a storage cost.

Directly transmitting data based on the vSAN protocol to other servers through the RDMA may improve transmission efficiency, reduce CPU overhead, and enhance performance for sequential read and random mixed read/write workloads, which are difficult to achieve using a conventional TCP-based Ethernet connection. Therefore, software-defined communication in the hyper converged infrastructure employs the RDMA to enable efficient data transmission and support fast data movement between the servers and storage without necessarily involving the operating system or increasing the operating system overhead of the server, thereby increasing throughput, decreasing latency, and releasing the CPU to run applications. The RDMA technology has been widely applied to efficient data transmission in rendering farms and large cloud deployments, such as HPC (including machine/deep learning), mission-critical SQL databases (such as Oracle RAC), and Microsoft SQL solutions.

In the related art, when configuring an RDMA network for a server in the hyper converged infrastructure, the following process mainly includes: manually checking prerequisites, manually creating a distributed switch, and manually enabling a vSAN cluster and the RDMA network. Manually checking the prerequisites includes: manually checking whether a network interface card model of each server in the cluster supports the RDMA and whether the network interface card is connected to a physical switch. For example, after checking the network interface card model of each server, the user logs in to a VMware website, to check through the website whether the network interface card of each server is vSAN certified. If the network interface card is vSAN certified, it is determined that the network interface card supports the RDMA network; otherwise, it is determined that the network interface card does not support the RDMA network. For network interface cards that support the RDMA network, whether network interface card models thereof are the same is manually sorted out and determined. If yes, an RDMA network configuration condition is satisfied, and if no, the RDMA network configuration condition is not satisfied. After the network interface card of each server satisfies the prerequisites, the user starts a vSphere client (for example, Web Client) and connects to a vCenter service (Server) instance to create a distributed switch through the vCenter, then adds each server to the distributed switch to create a distributed port group for vSAN traffic, and binds an uplink 1 and an uplink 2 to an RDMA network interface card (that is, the network interface card that supports the RDMA network) of each server, and manually set a load balancing policy to route not based on IP hash. After completing creation of the distributed switch, the user navigates the vSphere client to a vCenter interface (for example, a vSAN configuration interface), and manually selects to enable the RDMA network based on steps as indicated on the menu.

The network configuration method is completely manually performed, which not only results in low efficiency but also results in a high risk of a network configuration failure caused by manual errors.

In view of this, the embodiments of the present application provide an RDMA network configuration method. When an RDMA network needs to be configured, the configuration device may obtain network configuration information of a plurality of target servers, and automatically determine whether the network configuration information of the plurality of target servers satisfies an RDMA network configuration condition. When the network configuration information of the plurality of target servers satisfies the RDMA network configuration condition, the configuration device sends a configuration instruction to instruct configuration of the RDMA network for the plurality of target servers. During a network configuration process, the configuration device may automatically obtain the network configuration information of the plurality of target servers, and automatically determine whether the network configuration information of the plurality of target servers satisfies the RDMA network configuration condition, without necessarily manually obtaining the network configuration information of the plurality of target servers and manually determining whether the network configuration information of the plurality of target servers satisfies the RDMA network configuration condition. Therefore, not only efficiency of obtaining the network configuration information and determining whether the network configuration information satisfies the RDMA network configuration condition can be improved, but also accuracy of determining whether the network configuration information satisfies the RDMA network configuration condition can be enhanced, and further the risk of the RDMA network configuration failure can be reduced. In addition, in a case where the check result indicates that the network configuration information satisfies the RDMA network configuration condition, a network configuration instruction is sent to instruct configuration of the RDMA network for the plurality of target servers, thereby enhancing efficiency of configuring the RDMA network for the plurality of target servers.

The following describes a system architecture according to an embodiment of the present application.

The RDMA network configuration method provided in the embodiment of the present application is applicable to a software-defined storage scenario, for example, software-defined storage based on a VMware vSAN and a kernel-based virtual machine (kernel-based virtual machine, KVM).

For example, the network configuration method provided in the embodiment of the present application is applicable to scenarios of installation, deployment and host (that is, a server) expansion of a VMware vSAN product.

It should be noted that software that implements the software-defined storage scenario is not limited in the embodiment of the present application, and the foregoing is only for illustrative purposes. For example, it may also be software-defined storage implemented using software other than the VMware vSAN and the KVM.

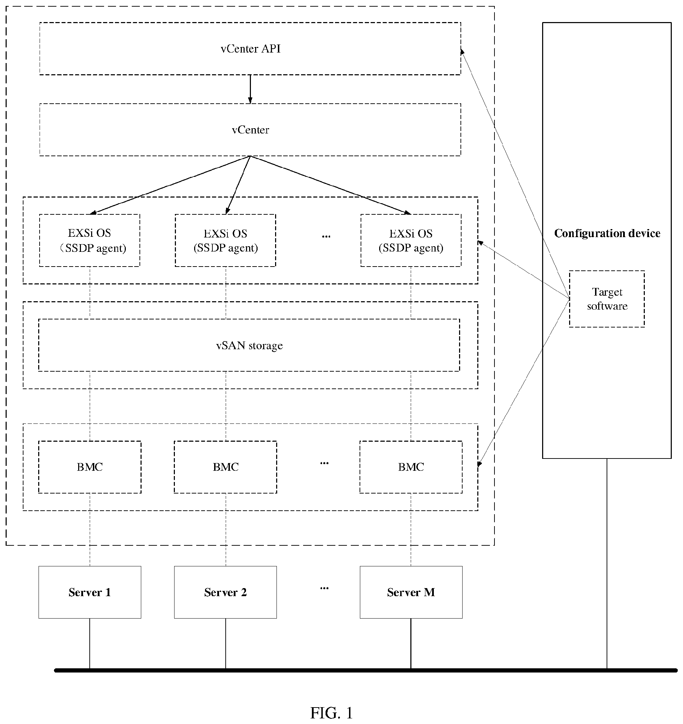

FIG. 1 is a schematic diagram illustrating a system architecture according to an embodiment of the present application.

In terms of hardware, the system architecture may include a plurality of first servers, and every two first servers among the plurality of first servers are connected to each other. For example, as shown in FIG. 1, the plurality of first servers may include a server 1, a server 2, ... and a server M.

In the embodiment of the present application, the plurality of first servers include a plurality of second servers, and third network interface card information of each of the plurality of second servers satisfies an RDMA network configuration condition.

In the embodiment of the present application, each first server may include a central processing unit and an out-of-band controller. The central processing unit is configured to implement in-band management for the server. The In-band management means that management data and service data of the user are transmitted over a same physical channel. The out-of-band controller is configured to implement out-of-band management for the server. The out-of-band management means that the management data and the service data of the user are transmitted over different physical channels. For example, the out-of-band controller may remotely maintain and manage the server over a dedicated data channel. The out-of-band controller is completely independent of the central processing unit of the server, and may communicate with the central processing unit through an out-of-band management interface of the server. For example, the out-of-band controller may include a baseboard management controller (baseboard management controller, BMC), and the like.

It should be noted that different servers have different names for the BMC. For example, it is called BMC for some servers, iLO (integrated lights-out) for some other servers, and iDRAC for others. Whether it is called the BMC, iLO, or iDRAC, it may be understood as the BMC in the embodiment of the present application.

Based on this, the system architecture may further include a configuration device. The configuration device may, based on the RDMA network configuration method in the embodiment of the present application, automatically obtain network configuration information of a plurality of target servers, and automatically determine whether the network configuration information of the plurality of target servers satisfies the RDMA network configuration condition.

For example, the configuration device may be a network device or a terminal device.

The network device may be a server and the like. The server may be one physical server, or two or more physical servers that share different responsibilities and collaborate with each other to implement various functions. For example, the server may be a blade server, a high-density server, a rack server or a tower server, and the like.

The terminal device may include a computer host, a tablet computer, a handheld computer, a personal digital assistant (personal digital assistant, PDA), an in-vehicle device (for example, an in-vehicle computer), an ultra-mobile personal computer (ultra-mobile personal computer, UMPC), a notebook computer, a netbook, a desktop computer, or an all-in-one computer, and the like.

For example, the plurality of first servers may form a cluster system, or may not form a cluster system. The embodiment of the present application imposes no limitation thereon.

The following describes the embodiment of the present application by using the plurality of first servers forming the cluster system as an example.

It should be noted that the configuration device may be any one of the plurality of first servers, or may be a device other than the plurality of first servers. The embodiment of the present application imposes no limitation thereon.

The following describes the embodiment of the present application by using the configuration device being the device other than the plurality of first servers as an example.

In the embodiment of the present application, the system architecture may further include a management server. The management server is configured to manage virtual machines on the plurality of first servers, and the like.

It should be noted that the management server may be any one of the plurality of first servers, or may be the device other than the plurality of first servers. The embodiment of the present application imposes no limitation thereon.

The following describes the embodiment of the present application by using the configuration device being any one of the plurality of first servers as an example.

In terms of software, out-of-band (out of band) management software, virtual machine software, and the like are installed on each of the plurality of first servers. The out-of-band management software may also be referred to as BMC management software, and is configured to perform out-of-band management on the server by using the out-of-band controller of the server.

For example, as shown in FIG. 1, BMC software (out-of-band management software) and ESXi software (virtual machine software) are installed on the server 1, the server 2, ... and the server M.

For a server where the EXSi software is installed, it may be deemed that the EXSi OS is installed at the same time.

In the embodiment of the present application, the EXSi software may be EXSi ISO software. The EXSi ISO software is customized software. The EXSi ISO software includes an SSDP Agent component.

For example, the first server may use the SSDP Agent component to advertise its presence to the SSDP server, for example, send device information, third network interface card information, and the like to the SSDP server. The first server may send SSDP messages to the SSDP client. The SSDP messages includes device information, third network interface card information, and the like.

For example, as shown in FIG. 1, the ESXi OS on the server 1, the server 2, ... and the server M includes the SSDP Agent component.

Alternatively, specified in-band software may be installed on the server 1, the server 2, ... and the server M through the ISO to configure the SSDP Agent component for the ESXi OS.

In terms of software, virtual machine management software is installed on the management server, and the management server may manage a virtual machine of each first server using the virtual machine management software. For example, as shown in FIG. 1, the virtual machine management software is vCenter.

In the embodiment of the present application, the virtual machine management software is configured with an application program interface (application program interface, API), and the management server may communicate with the configuration device through the API. For example, as shown in FIG. 1, when the management server manages the virtual machine on the first server using the vCenter software, the API may also be referred to as a vCenter API.

For example, a vSphere client may be further installed on the management server, and the management server may achieve a function of the vCenter software through the vSphere client (for example, a web client). Based on this, the vCenter API may also be referred to as a vSphere Web Client Service API, or simply referred to as a vSphere API.

In the embodiment of the present application, distributed storage software (for example, vSAN) is installed on each of the plurality of first servers, so that the plurality of first servers use vSAN storage, that is, the vSAN on the first server is enabled.

It should be noted that the vSAN installed on each first server supports RDMA network communication. For example, the vSAN may be vSAN 7.0 Update 2 and later versions.

It should be noted that types of the virtual machine software, the distributed storage software and the virtual machine management software in the embodiment of the present application are not limited, and the above are only for illustrative purposes.

In terms of software, target software is installed on the configuration device, and the configuration device implements the RDMA network configuration method in the embodiment of the present application by running the target software. For example, the network configuration information of the plurality of target servers is automatically obtained, and whether the network configuration information of the plurality of target servers satisfies the RDMA network configuration condition is automatically determined.

In the embodiment of the present application, the target software includes an SSDP component, and the configuration device receives, through the SSD component, the SSDP messages sent by the first server through the SSDP Agent component. Out-of-band information may be transmitted between the first server and the configuration device based on the SSDP, for example, first network interface card information, third network interface card information, an operating system version number, device information, and the like.

It should be noted that a name of the target software is not limited in the embodiment of the present application. For example, the target software may also be referred to as fusion center (for example, FusionOne Center) software.

For example, the configuration device may achieve RDMA network enabling for the plurality of target servers using the target software. For example, the RDMA network enabling for the plurality of target servers may be achieved based on the following steps: 1) device access: establishing a communication connection with the plurality of first servers in the cluster system; 2) automatic device discovery: automatically discovering the plurality of first servers; 3) device management: determining the plurality of second servers from the plurality of first servers, and displaying device information of the plurality of second servers, and the like; 4) compatibility check: determining the plurality of target servers from the plurality of second servers, and checking whether the network configuration information of the plurality of target servers satisfies the RDMA network configuration condition; 5) RDMA network configuration: obtaining configuration information of a distributed switch, and the like, so as to configure the RDMA network for the plurality of target servers; and 6) vCenter API: sending a network configuration instruction to the management server through the vCenter API.

It should be noted that, in the following embodiment, the target software performs an operation (for example, receiving the network configuration information of the plurality of target servers, and the like) may be deemed as performing an operation during a process where the configuration device runs the target software.

It should be noted that the system architecture and application scenarios described in the embodiment of the present application are intended to illustrate the technical solution of the embodiment of the present application more clearly, and do not constitute a limitation to the technical solution according to the embodiment of the present application. A person of ordinary skills in the art may understand that as the system architecture evolves and new application scenarios emerge, the technical solution according to the embodiment of the present application is equally applicable to similar technical issues.

For ease of understanding, the following describes the network configuration method provided in the embodiment of the present application, in combination with the system architecture as shown in FIG. 1.

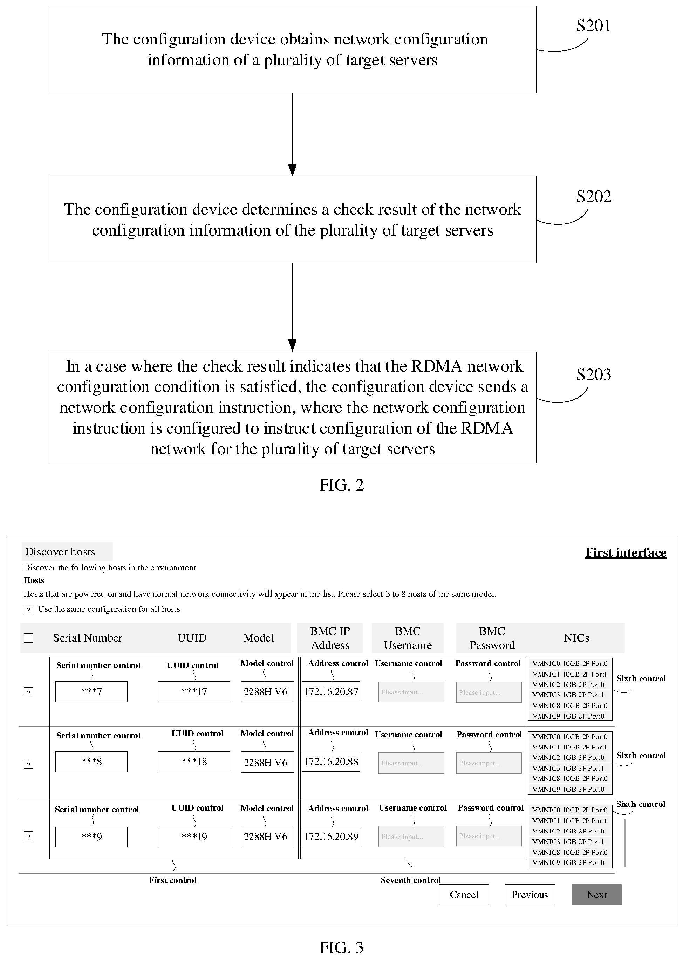

FIG. 2 is a flowchart illustrating the RDMA network configuration method according to an example embodiment. For example, the method may include the following S201 to S203.

The following describes the RDMA network configuration method provided in the embodiment of the present application by taking the configuration device being a device other than the cluster system for example.

S201: The configuration device obtains the network configuration information of the plurality of target servers.

Obtaining the network configuration information of the plurality of target servers means obtaining network configuration information of each of the plurality of target servers.

For example, the plurality of target servers may include the server 1, ... and a server K, where K is less than or equal to M. The server 1 sends network configuration information of the server 1 to the configuration device, ... and the server K sends network configuration information of the server K to the configuration device, so that the configuration device may receive the network configuration information of the server 1, ... and the network configuration information of the server K.

The following describes the embodiment of the present application by taking a single target server for example. The single target server may be any one of the plurality of target servers.

In the embodiment of the present application, the network configuration information of the target server may include a plurality of cases. The following makes an example description based on case 1 to case 3.

Case 1: The network configuration information of the target server may include a network interface card model.

In the embodiment of the present application, the target server may include one or more network interface cards. Based on this, the network configuration information of the target server may include one or more network interface card models.

In this case, the network configuration information of the target server is configured to include the network interface card model. In this way, the configuration device may automatically determine whether the network interface card models of the plurality of target servers satisfy the RDMA network configuration condition, thereby helping improve efficiency and accuracy of determining whether the network interface card models satisfy the RDMA network configuration condition, and further helping reduce a risk of an RDMA network configuration failure.

Case 2: The network configuration information of the target server may include an operating system version number.

For example, when the target server uses the EXSi OS, the operating system version number may also be referred to as an EXSi version number. For example, the EXSi version numbers may be VMware EXSi 7.0 Update2, EXSi 7.0 Update3, and the like. 7.0 is configured to represent the EXSi version number. Update2 and Update3 are configured to represent updated versions. Update may be simply referred to as U.

In this case, the network configuration information of the target server is configured to include the operating system version number. In this way, the configuration device may automatically determine whether the operating system version numbers of the plurality of target servers satisfy the RDMA network configuration condition, thereby helping improve the efficiency and accuracy of determining whether the operating system version numbers satisfy the RDMA network configuration condition, and further helping reduce the risk of the RDMA network configuration failure.

Case 3: The network configuration information of the target server may include a network interface card model and an operating system version number.

It needs to be noted that, for related descriptions of case 3, reference may be made to the case 1 or case 2, and details are not repeated here.

The following describes an example process of obtaining the operating system version number.

In the embodiment of the present application, the central processing unit of the target server may proactively send the operating system version number to the configuration device, and the configuration device receives the operating system version number sent by the central processing unit of the target server.

For example, the EXSi OS (an operating system running on the central processing unit) includes an SSDP Agent component. The EXSi OS of the target server automatically sends an SSDP message to the configuration device by invoking the SSDP Agent component. The SSDP message includes the operating system version number of the target server. After receiving the SSDP message, the target software on the configuration device parses the SSDP message to obtain the operating system version number of the target server. In this way, the configuration device may automatically obtain the network configuration information of the server in the cluster system based on an SSDP protocol, thereby helping improve efficiency and convenience of obtaining the network configuration information.

For example, the EXSi OS may send the SSDP message to the target software based on a preset period. After logging in to the target software on the configuration device, the user may automatically obtain the operating system version number of the target server through the target software.

It should be noted that a specific duration of the preset period is not limited in the embodiment of the present application, and for example, may be 1s, 20s, 100s, or the like.

Alternatively, in the embodiment of the present application, the configuration device may send a first obtaining request to the central processing unit of the target server. The first obtaining request is configured to request to obtain the operating system version number.

It should be noted that a method for obtaining the operating system version number of the target server is not limited in the embodiment of the present application, and the above is only for illustrative purposes.

The following describes a process of obtaining the network interface card model.

It should be noted that the target server may be configured with one or more network interface cards. The following describes a process of obtaining a model of any one network interface card by taking the any one of the one or more network interface cards as an example.

The following describes an implementation where the configuration device obtains the network interface card model based on S1 to S3.

S1: The configuration device receives first network interface card information sent by the target server.

The first network interface card information includes first network interface card four-tuple information.

In the embodiment of the present application, the configuration device may proactively obtain the first network interface card information from the central processing unit of the target server. For example, the configuration device sends a second obtaining request to the central processing unit. The second obtaining request is configured to request to obtain the first network interface card information. After receiving the second obtaining request, the central processing unit obtains the first network interface card information from the network interface card on the target server, and sends the first network interface card information to the configuration device.

Alternatively, in the embodiment of the present application, the central processing unit of the target server may proactively send the first network interface card information to the configuration device. For example, after obtaining the first network interface card information from the network interface card on the target server, the central processing unit proactively sends the first network interface card information to the configuration device.

It should be noted that, since the first network interface card information is provided by the central processing unit, the first network interface card information may also be referred to as in-band network interface card information, and the first network interface card four-tuple information may also be referred to as in-band network interface card four-tuple information.

For example, a process where the central processing unit sends the first network interface card information to the configuration device may include that: during a process of running the EXSi OS, the central processing unit sends an SSDP message to the configuration device by invoking the SSDP Agent component. The SSDP message includes the first network interface card information. The target software on the configuration device receives the SSDP message sent by the central processing unit.

It should be noted that, for other related descriptions of the SSDP message, reference may be made to the above embodiments, and details are not repeated here.

S2: The configuration device obtains second network interface card information of the target server.

The second network interface card information includes second network interface card four-tuple information and a target network interface card model. The target network interface card model is a model of a network interface card corresponding to the second network interface card four-tuple information.

In the embodiment of the present application, the configuration device may send a third obtaining request to an out-of-band controller of the target server (for example, BMC). The third obtaining request is configured to request to obtain the second network interface card information. After receiving the third obtaining request, the out-of-band controller obtains the second network interface card information from the network interface card on the target server, and sends the second network interface card information to the configuration dev ice.

It should be noted that, since the second network interface card information is obtained from the out-of-band controller, the second network interface card information may also be referred to as out-of-band network interface card information, and the second network interface card four-tuple information may also be referred to as out-of-band network interface card four-tuple information.

For example, the target software on the configuration device may send the third obtaining request to the out-of-band controller of the target server, and after receiving the third obtaining request, the out-of-band controller returns the second network interface card information to the target software.

In the embodiment of the present application, the configuration device may, based on out-of-band communication information of the target server, obtain the out-of-band network interface card information from the out-of-band controller of the target server. The out-of-band communication information includes an IP address of the BMC, a user name of the BMC, and a password of the BMC.

In an example, the configuration device stores the out-of-band communication information of the target server. In another example, the configuration device may obtain out-of-band communication information provided by the user. The example is described in subsequent embodiments, for example, S6, S7, S8, and the like, and details are not repeated here.

It should be noted that an execution order of S1 and S2 is not limited in the embodiment of the present application, and the above is only for illustrative purposes.

S3: In a case where the second network interface card four-tuple information is the same as the first network interface card four-tuple information, it is determined that a model of a network interface card corresponding to the first network interface card four-tuple information is the target network interface card model.

In the embodiment of the present application, the configuration device determines the network interface card model of the network interface card corresponding to the first network interface card four-tuple information by comparing network interface card four-tuple information (that is, the first network interface card four-tuple information) in the first network interface card information with network interface card four-tuple information (that is, the second network interface card four-tuple information) in the second network interface card information. In a case where the second network interface card four-tuple information is the same as the first network interface card four-tuple information, it indicates that the second network interface card four-tuple information and the first network interface card four-tuple information are four-tuple information of the same network interface card. Based on this, it may be determined that the model of the network interface card corresponding to the first network interface card four-tuple information is the target network interface card model.

For example, the target software on the configuration device may compare the network interface card four-tuple information in the first network interface card information with the network interface card four-tuple information in the second network interface card information.

In this implementation, a combination of in-band and out-of-band approaches is adopted. The network interface card model of the target server is automatically obtained by matching network interface card rules across the in-band and out-of-band approaches. For example, the configuration device obtains the first network interface card information (that is, the in-band network interface card information) and the second network interface card information (that is, the out-of-band network interface card information) of the target server, and compares the network interface card four-tuple information in the first network interface card information with the network interface card four-tuple information in the second network interface card information, to automatically determine a network interface card model of each network interface card of the target server. Compared with manually querying the network interface card models of the plurality of target servers in the related art, this helps improve efficiency of determining the network interface card models.

In the embodiment of the present application, the EXSi OS of the target server may serve as an SSDP client to send SSDP messages. The SSDP messages include an operating system version number, in-band network interface card information, and the like. The target software of the configuration device serves as an SSDP server (Service) to obtain the SSDP messages. In this way, the network interface card model and the operating system version number of the target server are automatically obtained, thereby helping simplify complexity of checking and managing environment information (for example, network interface card model, operating system version number, and the like).

It should be noted that when the network configuration information includes the operating system version number and the network interface card model, the configuration device may obtain the operating system version number and the network interface card model respectively, or may obtain the operating system version number and the network interface card model simultaneously. An order of obtaining the operating system version number and the network interface card model is not limited in the embodiment of the present application.

In the embodiment of the present application, the RDMA network configuration method may further include the following S200a to S200c.

S200a: The configuration device obtains third network interface card information of the plurality of first servers.

The third network configuration information of the plurality of first servers means third network configuration information of each of the plurality of first servers.

The third network interface card information of the plurality of first servers includes one or more of network interface card connection statuses, quantities of network interface cards, quantities of ports of a single network interface card, or network interface card port rates. The network interface card connection statuses of the plurality of first servers includes being physically connected or not being connected to a physical switch.

In the embodiment of the present application, the EXSi OS of the first server may serve as an SSDP agent to send an SSDP message, the SSDP message includes the third network interface card information, and the target software of the configuration device serves as an SSDP server to receive the SSDP message, thereby automatically obtaining the third network interface card information, thereby simplifying the complexity of checking and managing the third network interface card information.

S200b: The configuration device, based on the third network interface card information of the plurality of first servers, determines the plurality of second servers from the plurality of first servers.

Third network interface card information of the plurality of second servers satisfies the RDMA network configuration condition.

The network interface card information of the plurality of second servers satisfies the RDMA network configuration condition, means that third network interface card information of each of the plurality of second servers satisfies the RDMA network configuration condition.

It should be noted that the plurality of second servers may be all of the plurality of first servers, or may be some of the plurality of first servers.

S200c: The configuration device determines the plurality of target servers from the plurality of second servers.

In the embodiment of the present application, there are a plurality of manners for determining the plurality of target servers. In a manner, the configuration device may automatically determine at least some of the plurality of second servers as the plurality of target servers. In another manner, the user may determine the plurality of target servers from the plurality of second servers. The manner is described in a subsequent embodiment. For details, reference may be made to S6.

It should be noted that the plurality of target servers may be all of the plurality of second servers, or may be some of the plurality of second servers.

In the embodiment of the present application, the third network interface card information of the second servers satisfying the RDMA network configuration condition includes one or more of a network interface card connection status of each of the plurality of second servers being connected to the physical switch, quantities of network interface cards of different second servers among the plurality of second servers being the same, quantities of ports of single network interface cards of different second servers among the plurality of second servers being the same, or network interface card port rates of different second servers among the plurality of second servers being the same.

In the embodiment of the present application, after obtaining the third network interface card information of the plurality of first servers, the configuration device may, based on preset filtering conditions, determine the plurality of second servers from the plurality of first servers. The filtering conditions may include: the network interface card connection status being connected to the physical switch, the quantities of the network interface cards being the same, the quantities of ports of the single network interface cards being the same, the network interface card port rates being the same, and the like.

When the RDAM network is configured, the third network interface card information is required to satisfy the RDMA network configuration condition. Therefore, the third network interface card information of the plurality of first servers is obtained, the plurality of second servers whose third network interface card information satisfies the RDAM network configuration condition are filtered out, and then the plurality of target servers are determined from the plurality of second servers, thereby helping improve reliability and stability of an RDMA network established for the plurality of target servers.

In the embodiment of the present application, the filtering conditions may further include: the network interface card models being the same, the operating system version numbers being the same, the network interface card models belonging to a first set, the operating system version numbers belonging to a second set, and the like. In this way, a server that satisfies configuration of the RDMA network may be filtered out from the plurality of first servers.

In the embodiment of the present application, the configuration device may display a first interface based on the filtering conditions (which may also be referred to as SSDP message information filtering conditions), so as to provide a management interface of the servers for the user. In this way, the user may determine a plurality of target servers that need to perform a compatibility check (that is, determine the check result) through the management interface. This not only helps simplify cumbersomeness and complexity of VMware vSAN installation and host expansion, but also helps improve stability and reliability.

When the filtering conditions include the network interface card models being the same, the operating system version numbers being the same, the network interface card models belonging to the first set, and the operating system version numbers belonging to the second set, the first interface may be configured to display, to the user, servers that satisfy the requirements of creating the RDAM network in the cluster system, and the user may select a server for creating the RDMA network from these servers that fully satisfy the requirements of creating the RDAM network, thereby ensuring a success rate of creating the RDMA network.

The following describes a process of displaying the first interface based on S4 to S5.

S4: The configuration device obtains the device information of the plurality of second servers.

The device information of the plurality of second servers refers to device information of each of the plurality of second servers.

The device information includes one or more of a device serial number, a universally unique identifier (universally unique identifier, UUID), or a device model number.

For example, the configuration device may obtain the device information of the plurality of first servers while obtaining the third network interface card information of the plurality of first servers, or may obtain the device information of the plurality of second servers after determining the plurality of second servers from the plurality of first servers. The embodiment of the present application imposes no limitation thereon.

The following describes the embodiment of the present application by taking a case where the third network interface card information and the device information are obtained simultaneously as an example.

It needs to be noted that, for other related descriptions of S4, reference may be made to description of the S200a, and details are not repeated here.

S5: The configuration device displays the first interface. The first interface includes a first control.

The first control is configured to instruct display of the device information of the plurality of second servers.

It should be noted that, "the control is configured to instruct display of..." in the embodiment of the present application, for example, "the first control is configured to instruct display of the device information of the plurality of second servers", may also be understood as "the control is configured to instruct...". Details are not described herein.

For example, after obtaining the device information and the third network interface card information of the plurality of first servers, the configuration device displays the first interface based on the filtering conditions, that is, determines the plurality of second servers from the plurality of first servers, and displays the device information of the plurality of second servers on the first interface.

In this implementation, the device information of the plurality of second servers is displayed on the first interface, so that a server whose third network interface card information satisfies the RDMA network configuration condition is provided for the user. In this way, the user may select, from the server whose third network interface card information satisfies the RDMA network configuration condition, a server for which the check result is to be determined, which not only helps improve user experience, but also helps increase a probability that the check result indicates that the RDMA network configuration condition is satisfied.

For example, as shown in FIG. 3, the first control may include a serial number control. The serial number control is configured to instruct display of a serial number of the server. For example, the serial number control instructs ***7, ***8, ***9, and the like. The first control may further include a UUID control. The UUID control is configured to instruct display of a UUID of the server. For example, the UUID control instructs ***17, ***18, ***19, and the like. The first control may further include a model control. The model control is configured to instruct display of a model of the server. For example, the model control instructs 2288H V6, and the like.

For example, as shown in FIG. 3, device models of the plurality of second servers may be the same. In other words, the filtering conditions displayed may further include whether the device models are the same. In this way, the user may select to perform a compatibility check on servers with the same device model, thereby helping ensure stability and reliability of the established RDMA network.

In the embodiment of the present application, the first interface may further include a sixth control. The sixth control is configured to instruct display of the third network interface card information. The third network interface card information may include one or more of a quantity of network interface cards, a quantity of ports of a single network interface card, a network interface card port identifier, or a network interface card port rate.

For example, as shown in FIG. 3, the sixth control instructs network interface card information such as VMNIC0 10GB 2P Port0, VMNIC1 10GB 2P Port1, VMNIC2 1GB 2P Port0, VMNIC3 1GB 2P Port1, VMNIC8 10GB 2P Port0, and VMNIC9 1GB 2P Port0. VMNIC0, VMNIC1, VMNIC2, VMNIC3, VMNIC8, and VMNIC9 are configured to represent network interface card port identifiers, 10 GB and similar values are configured to represent network interface card port rates, and 2P represents that a quantity of network ports of a network interface card is 2. Port0 and Port1 represent network interface card port numbers.

For example, as shown in FIG. 3, network interface card port identifiers of different second servers among the plurality of second servers are the same. Based on this, the filtering conditions may further include having the same network interface card port identifiers. In this way, the user may select to perform a compatibility check on the servers having the same network interface card port identifiers, thereby improving stability and reliability of the configured RDMA network.

In the embodiment of the present application, the first interface may further include a seventh control. The seventh control is configured to instruct display of out-of-band communication information.

It should be noted that the seventh control on the first interface corresponds to each of the plurality of second servers. In other words, one second server corresponds to one seventh control, and the one seventh control is configured to obtain out-of-band communication information of the one second server.

For example, as shown in FIG. 3, the seventh control may include an address control configured to instruct display of BMC IP addresses. For example, the address control instructs IP addresses such as 172.16.20.87, 172.16.20.88, and 172.16.20.89. The seventh control may further include a username control configured to instruct display of a BMC username. The seventh control may further include a password control configured to instruct display of a BMC password.

For example, the user performs an input operation on the username control, and the configuration device, in response to the input operation of the user, obtains the BMC username, and displays the BMC username on the username control.

For example, the user performs an input operation on the password control, and the configuration device, in response to the input operation of the user, obtains an out-of-band BMC password, and displays the BMC password on the password control.

In the embodiment of the present application, the first interface may further include indication information such as "Discover hosts (that is, servers in the cluster system)", "Discover the following hosts in the environment", "Hosts", and "Hosts that are powered on and have normal network connectivity will appear in the list. Please select 3 to 8 hosts of the same model", "Use the same configuration for all hosts", "Serial Number", "UUID", "Model", "BMC IP Address", "BMC Username", "BMC Password", and "NICs". "NICs" are configured to indicate network interface card (Network Interface Card, NIC) information, and the network interface card may be simply referred to as a network card.

The following describes an implementation of S200c with reference to S6 by taking a case where the user determines the plurality of target servers as an example.

S6: The configuration device, in response to a first trigger operation on the first interface, determines the plurality of target servers from the plurality of second servers.

The first trigger operation instructs determining at least some selected ones of the plurality of second servers to be the plurality of target servers.

For example, after the configuration device displays the first interface, the user may perform a selection operation on the plurality of target servers, for example, "√" shown in FIG. 3, so as to select the at least some second servers among the plurality of second servers. The at least some second servers are the plurality of target servers.

In the embodiment of the present application, an execution order of "obtaining network configuration information of a plurality of target servers" and "in response to a first trigger operation on the first interface" is not limited.

In an example, the configuration device may obtain operating system version numbers of the plurality of target servers before executing "in response to a first trigger operation on the first interface", and obtain network interface card models of the plurality of target servers after executing "in response to a first trigger operation on the first interface".

In another example, the configuration device may obtain network configuration information such as the operating system version numbers and the network interface card models of the plurality of target servers after executing "in response to a first trigger operation on the first interface".

In the embodiment of the present application, the user may determine all of the plurality of second servers as the target servers, or the user may determine some of the plurality of second servers as the target servers.

In this implementation, the user may select the plurality of target servers through the first interface. In this way, flexibility of an RDMA network configuration is enhanced, and user experience is further improved.

S202: The configuration device determines a check result of the network configuration information of the plurality of target servers.

The check result is configured to indicate that the network configuration information of the plurality of target servers satisfies the RDMA network configuration condition or does not satisfy the RDMA network configuration condition.

In an implementation, the configuration device determines the check result of the network configuration information of the plurality of target servers. After the user selects the plurality of target servers on the first interface, the user clicks a "Next" control on the first interface. The configuration device, in response to a second trigger operation on the first interface (that is, an operation of clicking the "Next" control), determines the check result of the network configuration information of the plurality of target servers selected by the user.

For example, the configuration device is preset with compatibility check rules. The compatibility check rules may include whether the network interface card models belong to the first set, whether the operating system version numbers belong to the second set, whether the network interface card models are the same, whether the operating system version numbers are the same, and the like. When compatibility check is performed on the network configuration information of the plurality of target servers based on the compatibility check rules, if compatibility check results are all yes, the compatibility check results indicate that the RDMA network configuration condition is satisfied; otherwise, the compatibility check results indicate that the RDMA network configuration condition is not satisfied.

It should be noted that, when the configuration device needs to obtain out-of-band communication information of the plurality of target servers based on the seventh control on the first interface, the configuration device, in response to a trigger operation of the user on the first interface, may first obtain second network interface card information, and after determining a network interface card model of each of the plurality of target servers based on the first network interface card information and the second network interface card information, determine the check result of the network configuration information of the plurality of target servers.

The following describes another implementation of S202 through S7 to S8.

S7: The configuration device, in response to the second trigger operation on the first interface, displays a second interface.

The second interface includes a second control. The second control is configured to instruct display of a check item corresponding to the check result. The second trigger operation instructs display of the second interface.

In the embodiment of the present application, after the user performs the second trigger operation on the first interface, the configuration device displays the second interface. The second interface includes the second control. The second control is configured to instruct display of the check item corresponding to the check result.

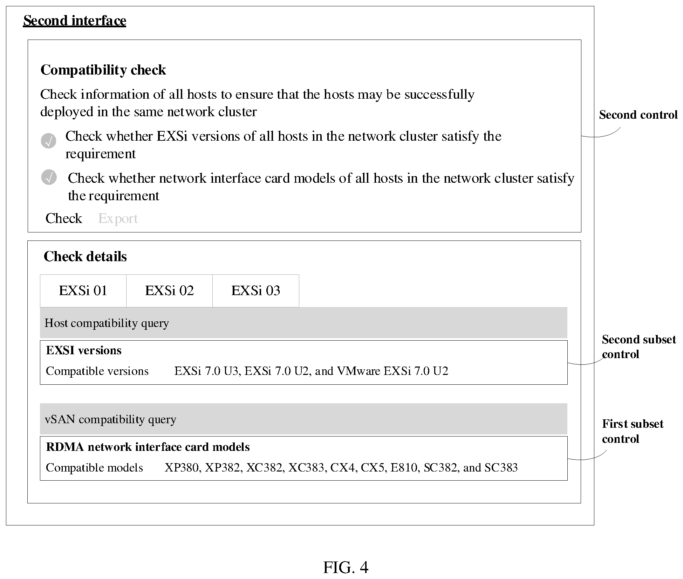

For example, after the user selects the plurality of target servers on the first interface, the user clicks the "Next" control on the first interface, and the configuration device, in response to the second trigger operation on the first interface (that is, the operation of clicking the "Next" control), displays the second interface, for example, the second interface shown in FIG. 4.

In the embodiment of the present application, the check item may include an EXSi version and/or a network interface card model.

For example, as shown in FIG. 4, checking the EXSi version may include checking whether EXSi versions of all hosts (that is, the plurality of target servers) in a network cluster satisfy the requirement, and checking the network interface card model may include checking whether network interface card models of all the hosts in the network cluster satisfy the requirement. Whether the EXSi versions satisfy the requirement may include whether EXSi version numbers belong to compatible versions (that is, the second set) and/or whether the EXSi version numbers are the same. Whether the network interface card models satisfy the requirement may include whether the network interface card models belong to compatible models (that is, the first set) and/or whether the network interface card models are the same.

If the EXSi version numbers belong to the compatible versions, that is, the second set, it indicates that EXSi supports the RDMA network. If the network interface card models belong to the compatible models, that is, the first set, it indicates that network interface cards corresponding to the network interface card models support the RDMA network.

For example, as shown in FIG. 4, the second interface may further include a set control. The set control is configured to instruct display of content of the target set. The set control may include a first subset control. The first subset control is configured to instruct display of content of the first set, for example, "compatible models XP380, XP382, XC382, XC383, CX4, CX5, E810, SC382, and SC383" shown in FIG. 4. The set control may include a second subset control. The second subset control is configured to instruct display of content of the second set, for example, "compatible versions EXSi 7.0 U3, EXSi 7.0 U2, and VMware EXSi 7.0 U2" shown in FIG. 4.

For example, the second interface may further include a system identifier control. The system identifier control is configured to instruct display of an operating system identifier of each of the plurality of target servers. For example, as shown in FIG. 4, the system identifier control instructs operating system identifiers such as EXSi 01, EXSi 02, and EXSi 03.

S8: The configuration device, in response to a third trigger operation on the second interface, determines the check result of the network configuration information of the target servers.

The third trigger operation is configured to instruct determining the check result of the network configuration information of the plurality of target servers based on the check item indicated by the second control.

In the embodiment of the present application, the second interface further includes a check control. The check control is configured to instruct checking whether the network configuration information of the plurality of target servers satisfies the RDMA network configuration condition.

In the embodiment of the present application, after the configuration device displays the second interface, the user performs the third trigger operation on the second interface, for example, clicking the "check" control shown in FIG. 3, and the configuration device, in response to the third trigger operation, based on the check item indicated by the second control, determines the check result of the network configuration information of the plurality of target servers.

It should be noted that, in the implementations of S7 to S8, the configuration device may, in response to the second trigger operation performed by the user on the first interface, obtain the network configuration information of the plurality of target servers, or may, in response to the third trigger operation performed by the user on the second interface, obtain the network configuration information of the plurality of target servers. The embodiment of the present application imposes no limitation thereon.

In this implementation, the check item corresponding to the check result is displayed on the second interface, so that the user may understand the check item performed on the network configuration information of the plurality of target servers, thereby helping ensure the accuracy of the RDMA network configuration condition and the user experience.

In the embodiment of the present application, a plurality of implementations for determining the check result of the network configuration information of the plurality of target servers may be included. The following makes an example description based on implementation 1 to implementation 3.

In the implementation 1, in a case where the network configuration information of the plurality of target servers is the same, and the network configuration information of the plurality of target servers belongs to the target set, it is determined that the check result indicates that the RDMA network configuration condition is satisfied.

In the embodiment of the present application, after obtaining the network configuration information of the plurality of target servers, the configuration device determines, based on a preset check item, whether the network configuration information of the plurality of target servers satisfies the RDMA network configuration condition, that is, whether the check result indicates that the RDMA network configuration condition is satisfied.

For example, the RDMA network configuration conditions may include: the network interface card models being the same, the network interface card models belonging to the first set, the operating system version numbers being the same, the operating system version numbers belonging to the second set, and the like.

In the embodiment of the present application, a plurality of cases where the check result indicates that the RDMA network configuration condition is satisfied may be included. The following makes an example description based on case 1 to case 3.

Case 1: Network interface card models of different target servers among the plurality of target servers are the same, and the network interface card model of each of the plurality of target servers belongs to the first set.

Each network interface card model in the first set indicates that the RDMA network is supported.

It should be noted that each network interface card model in the first set is vSAN certified. Therefore, a network interface card corresponding to each network interface card model in the first set supports the RDMA network.

In the embodiment of the present application, the network configuration information may include the network interface card models. The RDMA network configuration condition include: the network interface card models being the same, and the network interface cards supporting RDMA.

Based on this, in a case where the network interface card model of each of the plurality of target servers belongs to the first set, it indicates that the network interface card of each of the plurality of target servers supports the RDMA network. On this basis, in a case where the network interface card model of each of the plurality of target servers is the same, it indicates that the network configuration information of the plurality of target servers satisfies the RDMA network configuration condition, that is, the check result of the network configuration information of the plurality of target servers indicate that the RDMA network configuration condition is satisfied.

The network configuration information is configured to include the network interface card models, so that whether the network interface card models of the plurality of target servers satisfy the RDMA network configuration condition may be automatically determined. This helps improve efficiency and accuracy of determining whether the network interface card models satisfy the RDMA network configuration condition, and further helps enhance efficiency of configuring the RDMA network.

Case 2: Operating system version numbers of different target servers among the plurality of target servers are the same, and the operating system version numbers of the plurality of target servers belong to the second set.

Each operating system version number in the second set indicates that the RDMA network is supported. That is, an operating system corresponding to each operating system version number in the second set indicates that the RDMA network is supported.

In the embodiment of the present application, the network configuration information may include the operating system version numbers. The RDMA network configuration condition includes: the operating system version numbers being the same, and the operating systems supporting the RDMA network.

Based on this, in a case where an operating system version number of each of the plurality of target servers belongs to the second set, it indicates that an operating system of each of the plurality of target servers supports the RDMA network. On this basis, in a case where the operating system version number of each of the plurality of target servers is the same, it indicates that the network configuration information of the plurality of target servers satisfies the RDMA network configuration condition, that is, the check result of the network configuration information of the plurality of target servers indicates that the RDMA network configuration condition is satisfied.

The network configuration information is configured to include the operating system version numbers, so that whether the operating system version numbers of the plurality of target servers satisfy the RDMA network configuration condition is automatically determined. This helps improve efficiency and accuracy of determining whether the operating system version numbers satisfy the RDMA network configuration condition, and further helps enhance efficiency of configuring the RDMA network.

It needs to be noted that, for other related descriptions of the case 2, reference may be made to description of the above case 1, and details are not repeated here.

Case 3: The network interface card models of different target servers among the plurality of target servers are the same, and the network interface card model of each target server belongs to the first set, and the operating system version numbers of different target servers among the plurality of target servers are the same, and the operating system version number of each target server belongs to the second set.

It needs to be noted that, for related descriptions of the case 3, reference may be made to descriptions of the case 1 and the case 2, and details are not repeated here.

In the above embodiment, compatibility check items and compatible items (for example, the first set, the second set, and the like) are preset. Based on the compatibility check items, whether the network configuration information of the plurality of target servers satisfies the RDMA network configuration condition may be checked horizontally and vertically, for example, whether the network interface card models and the operating system version numbers of different target servers are the same is compared horizontally, and whether the network interface card model and the operating system version number of each target server support the RDMA network is checked vertically, so that compatibility check results of the network configuration information of the plurality of target servers are determined. When the compatibility check results indicate that the RDMA network configuration condition is satisfied, the RDMA network is configured for the plurality of target servers. This helps avoid a risk caused by enabling the RDMA network.

In the embodiment of the present application, the network configuration information of the plurality of target servers satisfying the RDMA network configuration condition may include one or more of third network interface card information of the plurality of target servers satisfying the RDAM network condition, the network interface card models of the plurality of target servers being the same, the network interface cards of the plurality of target servers supporting the RDMA network, the operating system version numbers of the plurality of target servers being the same, or operating systems of the plurality of target servers supporting the RDMA network.

On this basis, one or more of the following cases 4 to 6 where the check result indicates that the RDMA network configuration condition is satisfied may be further included.

Case 4: Hard disk models of the plurality of target servers are the same.

In the embodiment of the present application, the network configuration information may further include the hard disk models. The hard disk models of the plurality of target servers refer to a model of each hard disk of each of the plurality of target servers.

On this basis, in a case where the hard disk model of each of the plurality of target servers is the same, it indicates that the network configuration information of the plurality of target servers satisfies the RDMA network configuration condition, that is, the check result of the network configuration information of the plurality of target servers indicates that the RDMA network configuration condition is satisfied.

The network configuration information is configured to include the device models, so that whether the hard disk models of the plurality of target servers satisfy the RDMA network configuration condition is automatically determined. On one hand, it can be ensured that the hard disk model of each target server configured with the RDMA network is the same, thereby helping improve the stability of the RDMA network. On the other hand, it helps improve efficiency and accuracy of determining whether the hard disk model satisfies the RDMA network configuration condition, and further helps improve efficiency of configuring the RDMA network.

In case 5, quantities of hard disks of the plurality of target servers are greater than or equal to a quantity threshold.

In the embodiment of the present application, the network configuration information may further include the quantities of hard disks. The hard disk models of the plurality of target servers refer to a quantity of hard disks of each of the plurality of target servers.

On this basis, in a case where the quantity of hard disks of each of the plurality of target servers is greater than or equal to the quantity threshold, it indicates that the network configuration information of the plurality of target servers satisfies the RDMA network configuration condition, that is, the check result of the network configuration information of the plurality of target servers indicates that the RDMA network configuration condition is satisfied.

It should be noted that, in the embodiment of the present application, a specific value greater than the quantity threshold is not limited, and may be determined by the user based on the quantity of hard disks of each target server in the cluster system. For example, in a case where the quantity of hard disks in each target server in the cluster system is relatively large, the quantity threshold may be set to a relatively large value; otherwise, the quantity threshold may be set to a relatively small value.

The network configuration information is configured to include the quantities of hard disks, so that whether the quantities of hard disks of the plurality of target servers satisfy the RDMA network configuration condition may be automatically determined. On one hand, it can be ensured that the quantity of hard disks of each target server configured with the RDMA network is greater than or equal to the quantity threshold, thereby helping improve the stability of the RDMA network. On the other hand, it helps improve the efficiency and accuracy of determining whether the quantity of hard disks satisfies the RDMA network configuration condition, and further helps enhance the efficiency of configuring the RDMA network.

In case 6, device models of the plurality of target servers are the same.

In the embodiment of the present application, the network configuration information may further include the device models. The device models of the plurality of target servers refer to a model of each of the plurality of target servers.

On this basis, in a case where the device model of each of the plurality of target servers is the same, it indicates that the network configuration information of the plurality of target servers satisfies the RDMA network configuration condition, that is, the check result of the network configuration information of the plurality of target servers indicates that the RDMA network configuration condition is satisfied.

The network configuration information is configured to include the device models, so that whether the device models of the plurality of target servers satisfy the RDMA network configuration condition is automatically determined. On one hand, it can be ensured that the device model of each target server configured with the RDMA network is the same, thereby helping improve the stability of the RDMA network. On the other hand, it helps improve the efficiency and accuracy of determining whether the device model satisfies the RDMA network configuration condition, and further helps improve the efficiency of configuring the RDMA network.

In implementation 2, in a case where the network configuration information of the plurality of target servers is the same, it is determined that the check result indicates that the RDMA network configuration condition is satisfied.

It should be noted that, for other related descriptions of the implementation 2, reference may be made to the above implementation 1, and details are not repeated here.

In implementation 3, determining the check result of the network configuration information of the plurality of target servers includes: in a case where the network configuration information of the plurality of target servers belongs to the target set, determining that the check result indicates that the RDMA network configuration condition is satisfied.

It should be noted that, for other related descriptions of the implementation 3, reference may be made to the above implementation 1, and details are not repeated here.

Optionally, the network configuration method may further include displaying a fourth interface. The fourth interface includes a fourth control. The fourth control is configured to instruct display of a check result.

In the embodiment of the present application, after determining the check result of the network configuration information of the plurality of target servers, the configuration device displays the fourth interface. The fourth interface includes the fourth control, and the fourth control is configured to instruct display of the check result.

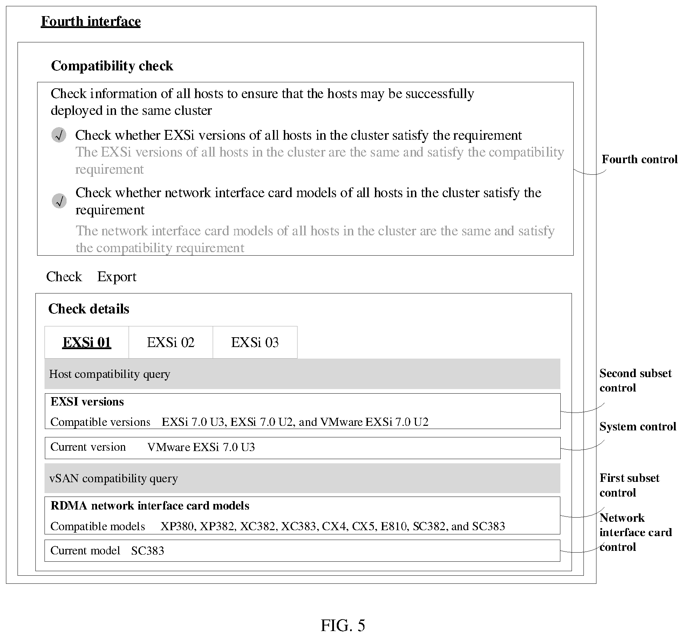

For example, the user clicks the check control shown in FIG. 4, and the configuration device displays the check result in response to the third trigger operation of the user. As shown in FIG. 5, the check result includes an EXSi version check result and a network interface card model check result. That is, the fourth control indicates the EXSi version check result and the network interface card model check result. The EXSi version check result indicates that EXSi versions of all hosts in the network cluster are the same and satisfy a compatibility requirement, and the network interface card model check result includes network interface card models of all hosts in the cluster are the same and satisfy the compatibility requirement.

The EXSi version satisfying the compatibility requirement means that the EXSi version belongs to a compatible version. For example, compatible versions include EXSi 7.0 U3, EXSi 7.0 U2, VMware EXSi 7.0 U2, and a current version is VMware EXSi 7.0 U3. Since VMware EXSi 7.0 U3 is the same as EXSi 7.0 U3 among the compatible versions, the current EXSi version is a compatible version, that is, the current EXSi version supports the RDMA network. The network interface card model satisfying the compatibility requirement means that the network interface card model is a compatible model. For example, compatible models include XP380, XP382, XC382, XC383, CX4, CX5, E810, SC382, and SC383. Since a current network interface card model is SC383, the current interface card model is a compatible model, that is, the current network interface card supports the RDAM network.

In the embodiment, the fourth interface is displayed, so that the user can understand the check result of the network configuration information of the plurality of target servers, thereby improving the user experience.

In the embodiment of the present application, the fourth interface further includes a check control. The check control is configured to instruct checking whether the network configuration information of the plurality of target servers satisfies the RDMA network configuration condition. The fourth interface is configured to include a detection control, so that the user may perform a further check on the network configuration information of the plurality of target servers.

In the embodiment of the present application, the fourth interface further includes an export control. The export control is configured to instruct export of the check result.

For example, the user clicks the export control on the fourth interface, and the configuration device, in response to a trigger operation on the fourth interface (that is, clicking the export control on the fourth interface), exports the check result of the network configuration information of the plurality of target servers.

In the embodiment, the fourth interface is configured to further include the export control, so that the user may export the check result of the network configuration information of the plurality of target servers, and save the check result, so as to store the check result.

In the embodiment of the present application, the fourth interface may further include a fifth control. The fifth control is configured to instruct display of the network configuration information and/or the target set of the plurality of target servers.

For example, as shown in FIG. 5, the fifth control may include a network interface card control. The network interface card control is configured to instruct display of a network interface card model, for example, "current model SC383" shown in FIG. 5. The fifth control may further include a system control. The system control is configured to instruct display of an operating system version number, for example, "current version VMware EXSi 7.0" shown in FIG. 5. The system control may be further configured to instruct display of an updated version of an operating system, for example, "current version U3" shown in FIG. 5.

In the embodiment of the present application, the fifth control may include a set control. The set control is configured to instruct display of content of the target set. For related descriptions of the set control, reference may be made to related descriptions of the set control as shown in FIG. 4, and details are not repeated here.

In the embodiment, the fourth interface is configured to further include the fifth control, so that the user may understand the network configuration information and/or the target set of the plurality of target servers.

In the embodiment of the present application, the fifth control may include a system identifier control. The system identifier control is configured to instruct display of the operating system identifier of each of the plurality of target servers. For related descriptions of the system identifier control, reference may be made to related descriptions of the system identifier control as shown in FIG. 4, and details are not repeated here.

For example, the configuration device displays, in response to a trigger operation performed by the user on the system identifier control, information of a server corresponding to the operating system identifier indicated by the system identifier control triggered by the user. For example, as shown in FIG. 5, when the user clicks "EXSi 01", the system control instructs an operating system version of the server corresponding to EXSi 01, that is, "current version VMware EXSi 7.0 U3", and the network interface card control instructs a network interface card model of the server corresponding to EXSi 01, that is, "current version SC383".

For example, when the configuration device vertically checks whether the network interface card model of each target server satisfies an RDMA compatibility requirement (that is, whether the RDMA network is supported), if the check result indicates that the RDMA compatibility requirement is satisfied, the first subset control instructs a compatible network interface card model (that is, a network interface card in the first set). If the network interface card model is not satisfied, the first subset control may instruct "-" and the like.

S203: In a case where the check result indicates that the RDMA network configuration condition is satisfied, the configuration device sends a network configuration instruction to instruct configuration of the RDMA network for the plurality of target servers.

In the embodiment of the present application, the network configuration instruction may include device information of the plurality of target servers, so that the management server may determine a server for which the RDMA network needs to be configured.

In the embodiment of the present application, a plurality of implementations for configuring the RDMA network for the plurality of target servers are included. In an implementation, the RDMA network may be configured by the user for the plurality of target servers. In another implementation, the RDMA network may be automatically configured by the management server for the plurality of target servers.

It should be noted that the user may configure the RDMA network for the plurality of target servers in a manner in the related art, and details are not described herein.

The following describes a process of "the management server automatically configures the RDMA network for the plurality of target servers" through S9 to S10.

S9: In a case where the check result indicates that the RDMA network configuration condition is satisfied, the configuration device obtains the configuration information of the distributed switch.

The configuration information of the distributed switch includes enabling the RDMA network.

In the embodiment of the present application, the configuration device stores the configuration information of the distributed switch. When the check result indicates that the RDMA network configuration condition is satisfied, the configuration device may obtain locally stored configuration information of the distributed switch. This helps improve convenience of obtaining the configuration information of the distributed switch.

Alternatively, in the embodiment of the present application, the configuration information of the distributed switch may be obtained through the following S9a to S9b.

S9a: In a case where the check result indicates that the RDMA network configuration condition is satisfied, the configuration device displays a third interface.

The third interface includes a third control. The third control is configured to instruct display of the configuration information of the distributed switch.

In the embodiment of the present application, the configuration information of the distributed switch may include: an identifier of the distributed switch, an identifier of each uplink of the distributed switch, an identifier of a network interface card port corresponding to each uplink, a load balancing policy of the distributed switch, and the like.

Optionally, the third control may include an identifier control. The identifier control is configured to instruct display of the identifier of the distributed switch.

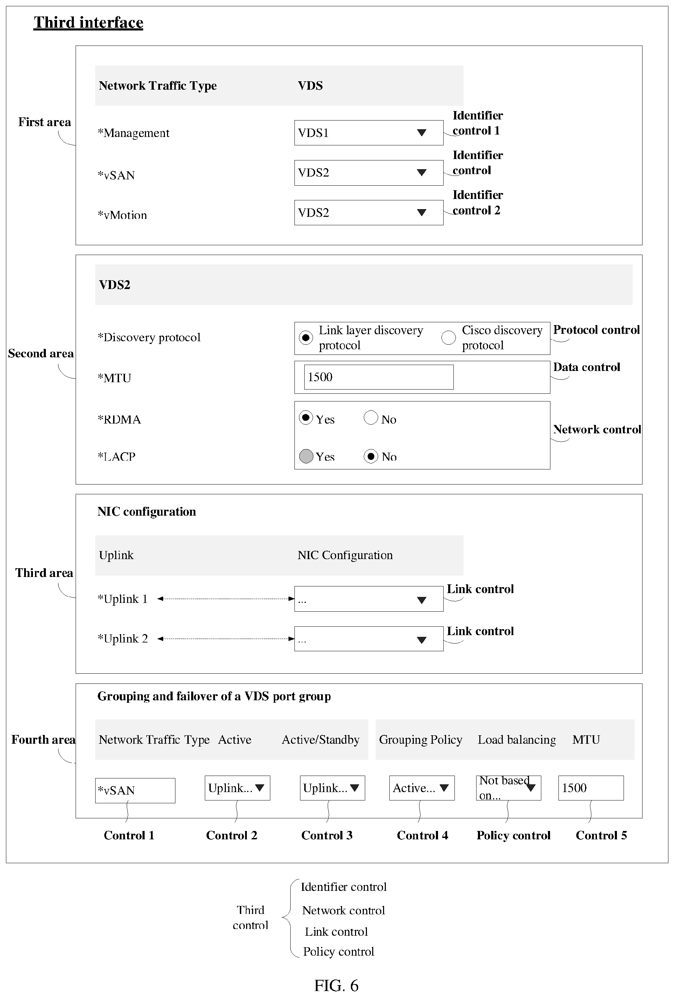

For example, as shown in FIG. 6, the third interface includes a first area, and the identifier control may be configured in the first area.

For example, the first area may further include indication information such as a network traffic type and a VDS (vSphere Distributed Switch, distributed switch).

For example, in a case where the check result indicates that the RDMA network configuration condition is not satisfied, the identifier control may be grayed out, that is, the user cannot manually select the identifier of the distributed switch. This helps avoid a risk of configuring the RDMA network for the plurality of target servers when the network configuration information of the plurality of target servers does not satisfy the RDMA network configuration condition.

For example, the third interface may further include an identifier control 1. The identifier control 1 instructs a distributed switch identifier corresponding to a "management network (Management)", for example, VDS1 shown in FIG. 6. In addition, the third interface may further include an identifier control 2. The identifier control 2 is configured to instruct display of a distributed switch identifier corresponding to a "migration network (vMotion)", for example, VDS2 shown in FIG. 6.

For example, as shown in FIG. 6, the identifier control 1 and the identifier control 2 may be configured in the first area.

Optionally, the third control may include a network control. The network control is configured to instruct display of a network type of a network interface card connected to the distributed switch. The network type includes an RDMA or a link aggregation control protocol (link aggregation control protocol, LACP).

For example, as shown in FIG. 6, the third interface includes a second area. The network control may be configured in the second area.

For example, as shown in FIG. 6, when the network configuration information of the plurality of target servers satisfies the RDMA network configuration condition, the RDAM network is automatically configured to be in an enabled state. In other words, the network control instructs enabling of the RDMA network. For example, among option controls (that is, "Yes control" and "No control") corresponding to the RDMA, "Yes control" is selected, that is, the network control instructs that the network type is an RDMA network. Based on this, when the distributed switch is created for the plurality of target servers, the RDMA network is enabled for the network interface cards of the plurality of target servers.

In the embodiment, the option controls are provided, so that the user may select whether to enable the RDMA network, thereby helping improve the user experience. When the plurality of target servers satisfy the RDMA network configuration condition, the "Yes control" among the option controls corresponding to the RDMA is automatically selected, so that the RDMA network may be automatically enabled when the RDMA network configuration condition is satisfied. This avoids a risk of an erroneous operation caused by manual configuration of the RDMA network in related art. For example, when the RDMA network configuration condition is satisfied, an LACP network is selected to be enabled.

For example, when the network configuration information of the plurality of target servers does not satisfy the RDMA network configuration condition, the network control does not support selecting to enable the RDMA network. For example, the "Yes control" among the option controls corresponding to the RDMA network is grayed out, so that the user cannot select to enable the RDMA network, thereby helping avoid a risk brought by enabling the RDMA network.

For example, as shown in FIG. 6, when the network configuration information of the plurality of target servers satisfies the RDMA network configuration condition, the LACP network is automatically configured to be in a disabled state. In other words, the network control instructs disabling of the LACP network. For example, among option controls corresponding to the LACP (that is, "Yes control" and "No control"), the "No control" is automatically selected.

For example, when the network configuration information of the plurality of target servers satisfies the RDMA network configuration condition, the "Yes control" among the option controls corresponding to the LACP is grayed out, and the user cannot manually select the "Yes control", thereby avoiding a risk of manual configuration.

In the embodiment, when the network control is configured to instruct enabling of the RDMA network and disabling of the LACP network simultaneously, this helps avoid selecting to enable the LACP network due to the erroneous operation by the user.

For example, the third interface may include a protocol control. The protocol control is configured to instruct display of discovery protocols used by the distributed switch. The discovery protocols include a link layer discovery protocol (Link Lay Discovery Protocal) and a Cisco discovery protocol (Cisco Discovery Protocal). For example, as shown in FIG. 6, the protocol control instructs the "link layer discovery protocol", that is, the discovery protocol used by the distributed switch is the link layer discovery protocol.

For example, as shown in FIG. 6, the protocol control may be configured in the second area.

For example, the third interface may further include a data control. The data control is configured to instruct display of a maximum transmission unit (maximum transmission unit, MTU). For example, as shown in FIG. 6, the MTU indicates 1500 byte.

For example, the second area may further include indication information such as "discovery protocol, VDS2 (vSphere Distributed Switch2)", "*MTU", "*RDMA", and "*LACP".

Optionally, the third control may include a link control. The link control is configured to instruct display of an identifier (that is, a network interface card port identifier) of a network interface card port connected to each uplink of the distributed switch.

For example, as shown in FIG. 6, the third interface may include a third area. The link control may be configured in the third area.

For example, the third area may further include indication information such as "uplink", "NIC configuration", "*uplink 1", and "*uplink 2".

For example, when the plurality of target servers satisfy the RDMA network configuration condition, the link control instructs network interface card port identifiers of the plurality of target servers, thereby providing, for the user, a network interface card port identifier of a server that satisfies the RDMA network configuration condition, without requiring the user to perform filtering, thereby improving the user experience and the accuracy and reliability of configuring the RDMA network.

For example, when the plurality of target servers satisfy the RDMA network configuration condition, the link control instructs port identifiers of the RDMA network interface cards, thereby providing, for the user, the network interface card port identifier of the server that satisfies the RDMA network configuration condition, without requiring the user to perform filtering, thereby improving the user experience and the accuracy and reliability of configuring the RDMA network.

It should be noted that a quantity of the link controls is not limited in the embodiment of the present application. The two link controls shown in FIG. 6 are for illustrative purposes only.

Optionally, the third control may include a policy control. The policy control is configured to instruct display of the load balancing policy of the distributed switch.

For example, as shown in FIG. 6, the third interface includes a fourth area. The policy control may be configured in the fourth area.

For example, the fourth area may further include a control 1. The control 1 is configured to instruct display of a network traffic type (that is, vSAN). The fourth area may further include a control 2. The control 2 is configured to instruct display of a link identifier used by the distributed switch. The fourth area may further include a control 3. The control 3 is configured to instruct display of a link identifier of an active or standby link in the distributed switch. The fourth area may further include a control 4. The control 4 is configured to instruct display of a grouping policy, that is, whether a link corresponding to the link identifier indicated by the control 3 is active or standby. The fourth area may further include a control 5. The control 5 is configured to instruct display of an MTU.

For example, the fourth area may further include indication information such as "grouping and failover of a VDS port group", "network traffic type", "active", "active/standby", "grouping policy", "load balancing", and "MTU". "network traffic type" corresponds to the control 1, "active" corresponds to the control 2, "active/standby" corresponds to the control 3, "grouping policy" corresponds to the control 4, "load balancing" corresponds to the policy control, and "MTU" corresponds to the control 5.

It should be noted that the first area, the second area, the third area, and the fourth area on the third interface may be displayed on the same interface, or may be displayed on different interfaces. The embodiment of the present application imposes no limitation thereon. The foregoing display on the same interface is for illustrative purposes.

S9b: The configuration device, based on the third control on the third interface, obtains the configuration information of the distributed switch.

Optionally, the identifier of the distributed switch may be obtained based on the identifier control.

For example, the user performs a selection operation on the identifier control, for example, clicks an option control (that is, a triangle on the identifier control) on the identifier control, and the configuration device, in response to the selection operation performed by the user on the identifier control, displays a drop-down menu of the identifier. The drop-down menu includes an identifier that may be used by the distributed switch. The performs a selection operation on an identifier (for example, VDS2), for example, clicks VDS2, and the configuration device, in response to the selection operation performed by the user on "VDS2", obtains "VDS2", and displays "VDS2" on the identifier control, as shown in FIG. 6.

Optionally, a network interface card port identifier corresponding to each uplink may be obtained based on a link control.

For example, the user performs a selection operation on the link control, for example, clicks an option control (that is, a triangle on the identifier control) on the link control, and the configuration device, in response to the selection operation performed by the user on the link control, displays a drop-down menu of the network interface card port identifier. The drop-down menu includes an identifier of a network interface card port that may be connected to the uplink. The user performs a selection operation on an identifier of the network interface card port (for example, VMNIC0 10GB 2P Port0), and the configuration device, in response to the user's selection operation on the identifier of the network interface card port, obtains the identifier of the network interface card port, and displays the VMNIC0 10GB 2P Port0 on the link control, thereby determining the identifier of the network interface card port of each target server connected to the uplink.

In the embodiment of the present application, the second area may further include an identifier of an uplink, and obtain an identifier of each uplink of the distributed switch based on the identifier of the uplink.

For example, as shown in FIG. 6, identifiers of the uplink includes the uplink 1 and the uplink 2. An identifier of one uplink may correspond to one link control. For example, the uplink 1 corresponds to a link control 1, and the uplink 2 corresponds to a link control 2.

Based on this, the configuration device may determine, based on the link control corresponding to the identifier of each uplink, the network interface card port identifier corresponding to each uplink. For example, as shown in FIG. 6, a network interface card port identifier corresponding to the uplink 1 may be determined based on the link control 1, and a network interface card port identifier corresponding to the uplink 2 may be determined based on the link control 2.

For example, the user performs a selection operation on the link control 1 corresponding to the uplink 1, for example, clicks an option control (that is, a triangle on the identifier control) on the link control 1, and the configuration device, in response to the selection operation performed by the user on the link control 1, displays the drop-down menu of the network interface card port identifier. The drop-down menu includes an identifier of a network interface card port that may be connected to the uplink 1. The user performs a selection operation on the identifier of the network interface card port (for example, VMNIC0 10GB 2P Port0), and the configuration device, in response to the user's selection operation on the identifier of the network interface card port, obtains the identifier of the network interface card port, and displays VMNIC0 10GB 2P Port0 on the link control 1, thereby determining an identifier of a network interface card port of each target server connected to the uplink 1.

It should be noted that for a manner where the configuration device determines the identifier of the network interface card port connected to the uplink 2, reference may be made to the foregoing manner for determining the identifier of the network interface card port connected to the uplink 1, and details are not described herein.

Optionally, the load balancing policy of the distributed switch may be obtained based on the policy control.

For example, as shown in FIG. 6, the user performs a selection operation on the policy control, for example, clicks an option control (that is, a triangle on the identifier control) on the policy control, and the configuration device, in response to the selection operation performed by the user on the policy control, displays a drop-down menu of the load balancing policy. The drop-down menu includes a load balancing policy that may be used by the distributed switch. The user performs a selection operation on the load balancing policy (for example, route not based on IP hash), for example, clicks "route not based on IP hash", and the configuration device, in response to the user's selection operation on the load balancing policy, obtains the load balancing policy, and displays the load balancing policy on the policy control.

It should be noted that when the load balancing policy is displayed, all content of the load balancing policy may be displayed, for example, "route not based on IP hash" may be displayed; or partial content of the load balancing policy may be displayed, for example, "not based on..." is displayed.

In the embodiment of the present application, when the plurality of target servers satisfy the RDMA network configuration condition, the policy control does not support selecting route based on IP hash. This helps prevent the user from selecting an incorrect load balancing policy due to an erroneous operation.

S10: The configuration device sends a network configuration instruction. The network configuration instruction includes the configuration information of the distributed switch.

The network configuration instruction is configured to instruct creation of the distributed switch for the plurality of target servers based on the configuration information of the distributed switch.

In the embodiment of the present application, after obtaining the configuration information of the distributed switch, the configuration device sends the network configuration instruction to the management server. The network configuration instruction includes the configuration information of the distributed switch and the device information of the plurality of target servers, and is configured to instruct the management server to create the distributed switch for the plurality of target servers based on the configuration information of the distributed switch. After receiving the network configuration instruction, the management server, in response to the network configuration instruction, based on the configuration information of the distributed switch, automatically creates the distributed switch, and adds the plurality of target servers to the created distributed switch. Since the configuration information of the distributed switch includes enabling the RDMA network, the distributed switch created based on the configuration information of the distributed switch configures a network type of the distributed switch to enabling the RDMA network, so that communication among the plurality of target servers may be performed based on the RDMA network.

For example, the identifier of the distributed switch is VDS2, and the network type of the network interface card connected to the distributed switch (that is, VDS2) is an RDMA network, that is, the network interface card connected to the VDS2 enables the RDMA network, so that communication among the plurality of target servers through the VDS2 may be performed based on the RDMA network.

On this basis, the VDS2 is configured with the uplink 1 and the uplink 2. The uplink 1 may be connected to a network interface card port 1 of each of the plurality of target servers. For example, the network interface card port 1 may be the VMNIC0 10GB 2P Port0 shown in FIG. 3. The uplink 2 may be connected to a network interface card port 2 of each of the plurality of target servers. For example, the network interface card port 2 may be the VMNIC1 10GB 2P Port1 shown in FIG. 3.

In the embodiment, when the check result is configured to indicate that the RDMA network configuration condition is satisfied, the configuration information of the distributed switch is obtained, and the network configuration instruction is configured to include the configuration information of the distributed switch, so as to instruct the management server to create the distributed switch based on the configuration information of the distributed switch. In this way, the RDMA network of the network interface card connected to the distributed switch is enabled, and further the RDMA network is configured for the plurality of target servers, thereby improving the efficiency and convenience of network configuration and further improving the user experience.

In the embodiment of the present application, the configuration device may enable the RDMA network through a vCenter API according to a rule. For example, the target software on the configuration device may send a network configuration instruction to a vCenter on the management server through the vCenter API.

For example, the vCenter is installed on the management server, and the vCenter software is configured with an application programming interface (Application Programming Interface, API). Based on this, the target software on the configuration device invokes the API, and sends the network configuration instruction to the vCenter software on the management server. After receiving the network configuration instruction, the vCenter software, in response to the network configuration instruction, configures the RDMA network for the plurality of target servers.

In the embodiment, when the RDMA network needs to be configured, the configuration device may automatically obtain the network configuration information of the plurality of target servers, and automatically determine whether the network configuration information of the plurality of target servers satisfies the RDMA network configuration condition. In a case where the network configuration information of the plurality of target servers satisfies the RDMA network configuration condition, the configuration device sends the configuration instruction to instruct configuration of the RDMA network for the plurality of target servers. During a network configuration process, the network configuration information of the plurality of target servers may be automatically obtained, and whether the network configuration information of the plurality of target servers satisfies the RDMA network configuration condition may be automatically determined, without requiring manual acquisition of the network configuration information of the plurality of target servers and determination of whether the network configuration information of the plurality of target servers satisfies the RDMA network configuration condition. Therefore, not only efficiency of configuring the RDMA network can be improved, but also accuracy of determining whether the network configuration information satisfies the RDMA network configuration condition can be enhanced, and further a risk of an RDMA network configuration failure can be reduced. In addition, in a case where the network configuration information of the plurality of target servers satisfies the RDMA network configuration condition, the configuration device sends the network configuration instruction, for example, sends the network configuration instruction to the management server to instruct the management server to automatically configure the RDMA network for the plurality of target servers, thereby helping improve the efficiency of configuring the RDMA network.

It can be seen that, the network configuration method provided in the embodiment of the present application reduces a cumbersome compatibility check required when the RDMA network is enabled, thereby simplifying complexity of the RDMA network configuration. In addition, a risk brought by human operation may be further avoided.

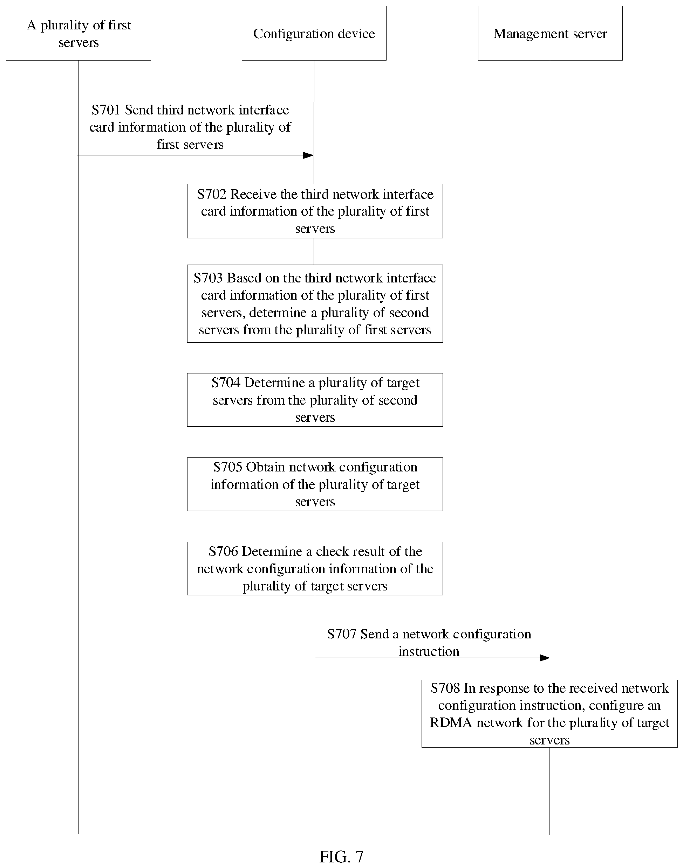

FIG. 7 is an interaction flowchart illustrating the network configuration method according to an example embodiment. For example, the method may include the following steps S701 to S708.

S701: The plurality of first servers send third network interface card information of the plurality of first servers to the configuration device.

S702: The configuration device receives the third network interface card information of the plurality of first servers sent by the plurality of first servers.

S703: The configuration device, based on the third network interface card information of the plurality of first servers, determines a plurality of second servers from the plurality of first servers.

S704: The configuration device determines a plurality of target servers from the plurality of second servers.

S705: The configuration device obtains network configuration information of the plurality of target servers.

S706: The configuration device determines a check result of the network configuration information of the plurality of target servers.

S707: In a case where the check result indicates that the RDMA network configuration condition is satisfied, the configuration device sends a network configuration instruction to the management server.

S708: The management server, in response to the received network configuration instruction, configures an RDMA network for the plurality of target servers.

It should be noted that an execution order of S702 to S706 is not limited in the embodiment of the present application.

It needs to be noted that, for related descriptions of S701 to S708, reference may be made to related descriptions of the S201 to S203, and details are not repeated here.

In the embodiment, when the RDAM network needs to be configured, the plurality of first servers in the cluster system sends the third network interface card information of the plurality of first servers to the configuration device. The configuration device, based on the third network interface card information of the plurality of first servers, determines, from the plurality of first servers, the plurality of second servers whose third network interface card information satisfies the RDAM network configuration condition, and determines, from the plurality of second servers, the plurality of target servers, thereby ensuring reliability and stability of the RDMA network established for the plurality of target servers.

In addition, during the network configuration process, the configuration device may automatically obtain the network configuration information of the plurality of target servers, and automatically determine whether the network configuration information of the plurality of target servers satisfies the RDMA network configuration condition, without necessarily manually obtaining the network configuration information of the plurality of target servers and determining whether the network configuration information of the plurality of target servers satisfies the RDMA network configuration condition. Therefore, not only the efficiency of configuring the RDMA network can be improved, but also the accuracy of determining whether the network configuration information satisfies the RDMA network configuration condition can be enhanced, and further a risk of an RDMA network configuration failure can be reduced. In addition, since the management server may automatically configure the RDMA network for the target server, compared with manual configuration, this not only helps improve the accuracy and efficiency of configuring the RDMA network, but also helps improve the user experience.

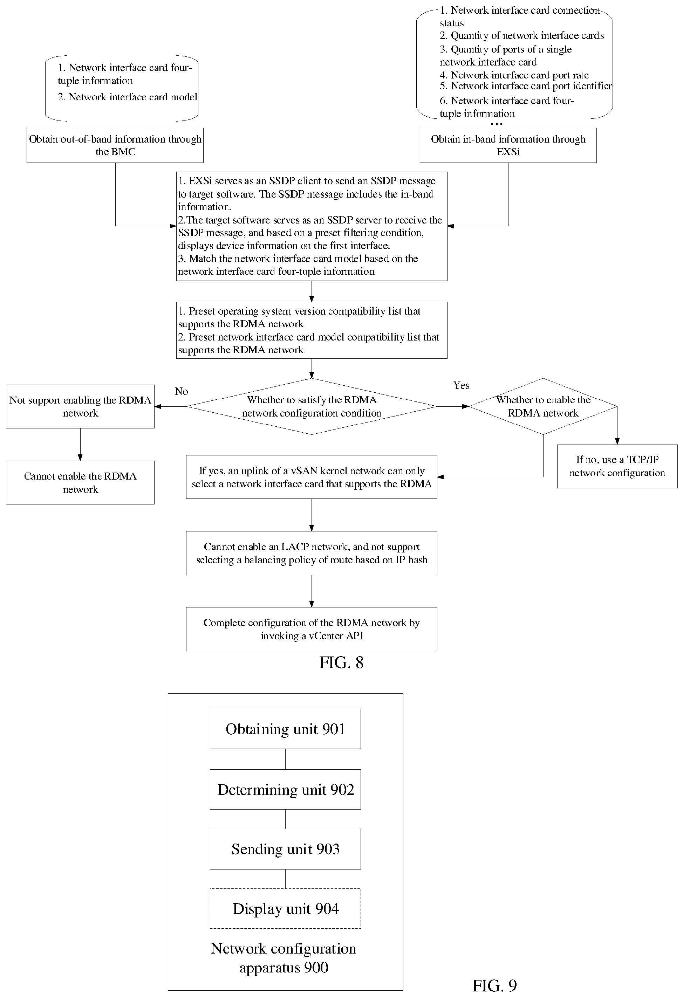

FIG. 8 is a schematic diagram illustrating the network configuration method according to an example embodiment.

The following describes a specific embodiment of the network configuration method according to the embodiment of the present application, in combination with FIG. 8.

For example, as shown in FIG. 8, the first server obtains in-band information through EXSi. For example, the in-band information may include first network interface card information (for example, first network interface card four-tuple information, and the like), third network interface card information (for example, a network interface card connection status, a network interface card port name, a network interface card port rate, a quantity of network interface cards, and a quantity of ports of a single network interface card), and the like. Then, the EXSi of the first server serves as an SSDP client to send an SSDP message to the target software. The SSDP message includes the in-band information.

After receiving the SSDP message through the target software, the configuration device, based on a preset filtering condition, filters out the plurality of second servers from the plurality of first servers, and obtains the device information of the plurality of second servers, and then displays the first interface. The first interface includes the device information of the plurality of second servers. The user inputs out-of-band communication information of the plurality of target servers on the first interface (for example, BMC username, BMC password, and the like). The configuration device obtains the out-of-band communication information of the plurality of target servers provided by the user through the first interface.

Then, the configuration device, in response to a trigger operation performed by the user on the first interface, for example, clicks a Next control on the first interface to display a second interface. The second interface includes check items such as "Check whether EXSi versions of all hosts in a network cluster satisfy the requirement" and "Check whether network interface card models of all hosts in the network cluster satisfy the requirement". After the user clicks the check control on the second interface, the configuration device, in response to the trigger operation of the user, obtains network configuration information of the plurality of target servers, for example, operating system version number, network interface card model, and the like.

For example, the configuration device may, based on the out-of-band communication information and the out-of-band controller of the target server (for example, BMC), obtain the second network interface card information of the target server (for example, network interface card four-tuple information and network interface card model) and based on the network interface card four-tuple information in the second network interface card information, a network interface card signal, and network interface card four-tuple information in the first network interface card information, determine the network interface card model of the target server.

After obtaining the network configuration information of the plurality of target servers, the configuration device, based on a preset operating system version compatibility list (that is, the second set) that supports the RDMA network, a network interface card model compatibility list (that is, the first set) that supports the RDMA network, and the network configuration information of the plurality of target servers, determines whether the network configuration information of the plurality of target servers satisfies the RDMA network configuration condition. If yes, the plurality of target servers support selecting whether to enable the RDMA network. If no, the plurality of target servers do not support enabling the RDMA network, that is, the RDMA network cannot be enabled.

In a case where selecting whether to enable the RDMA network is supported, enabling the RDMA network may be selected, or disabling the RDMA network may be selected. When disabling the RDMA network is selected, a TCP/IP network is used by default. In a case where enabling the RDMA network is selected, an uplink of a vSAN kernel network can only select the network interface card that supports RDMA, and cannot enable the LACP network, and does not support selecting the balancing policy of route based on IP hash.

On this basis, the configuration device may send a network configuration instruction to the management server by invoking the vCenter API, to instruct the management server to complete configuration of the RDMA network.

The above mainly introduces the solution provided in the embodiments of the present application from the perspective of methodology. To achieve the above functions, a network configuration apparatus includes hardware structures and/or software modules that perform each function. It should be readily apparent to a person skilled in the art that the units and algorithm steps of various examples described with the embodiments disclosed herein may be implemented by hardware, or a combination of hardware and computer software. Whether a particular function is executed by hardware or software driving the hardware depends on a specific application and design constraints of the technical solution. Professional technicians may use different methods for each specific application to achieve the described functions, but such an implementation should not be considered beyond the scope of the present application.

In the embodiments of the present application, for example, functional modules of the network configuration apparatus may be divided according to the above methods. For example, the network configuration apparatus may include various functional modules divided according to corresponding functions, or integrate two or more functions in one processing module. The above integrated modules may be implemented either in a form of hardware or software functional modules. It should be noted that division of modules in the embodiments of the present application is illustrative and represents only a logical function division. Other division methods may be used in actual implementation.

For example, FIG. 9 is a possible structural diagram of the RDMA network configuration apparatus (denoted as an RDMA network configuration apparatus 900) involved in the above embodiments. The actions performed by the RDMA network configuration apparatus 900 are implemented by the configuration device or by executing corresponding software through the configuration device. The RDMA network configuration apparatus 900 may include an obtaining unit 901, a determining unit 902, and a sending unit 903. The obtaining unit 901 is configured to obtain network configuration information of a plurality of target servers. The determining unit 902 is configured to determine a check result of the network configuration information of the plurality of target servers. The check result is configured to indicate that an RDMA network configuration condition is satisfied or an RDMA network configuration condition is not satisfied. The sending unit 903 is configured to, in a case where the check result indicates that the RDMA network configuration condition is satisfied, send a network configuration instruction. The network configuration instruction instructs configuration of an RDMA network for the plurality of target servers.

Optionally, the determining unit 902 is specifically configured to, in a case where the network configuration information of the plurality of target servers is the same, and the network configuration information of the plurality of target servers belongs to a target set, determine that the check result indicates that the RDMA network configuration condition is satisfied; the network configuration information of the plurality of target servers satisfies the RDMA network configuration condition.

Optionally, the network configuration information includes a network interface card model, the target set includes a first set, and each network interface card model in the first set supports the RDMA network. The determining unit 902 is specifically configured to, in a case where network interface card models of the plurality of target servers are the same, and the network interface card models of the plurality of target servers belong to the first set, determine that the check result indicates that the RDMA network configuration condition is satisfied.

Optionally, the obtaining unit 901 is specifically configured to, obtain first network interface card information through a central processing unit of the target server, where the first network interface card information includes first network interface card four-tuple information; obtain second network interface card information through an out-of-band controller of the target server, where the second network interface card information includes second network interface card four-tuple information and a target network interface card model; and in a case where the first network interface card four-tuple information is the same as the second network interface card four-tuple information, determine that a model of a network interface card corresponding to the first network interface card four-tuple information is the target network interface card model.

Optionally, the network configuration information may include an operating system version number, the target set includes a second set, and each operating system version number in the second set indicates that the RDMA network is supported. The determining unit 902 is specifically configured to, in a case where operating system version numbers of the plurality of target servers are the same, and the operating system version numbers of the plurality of target servers belong to the second set, determine that the check result indicates that the RDMA network configuration condition is satisfied.

Optionally, the obtaining unit 901 is specifically configured to, obtain third network interface card information of a plurality of first servers; based on the third network interface card information of the plurality of first servers, determine a plurality of second servers from the plurality of first servers, where third network interface card information of the plurality of second servers satisfies the RDMA network configuration condition; and determine the plurality of target servers from the plurality of second servers.

Optionally, the third network interface card information of the plurality of first servers includes one or more of network interface card connection statuses, quantities of network interface cards, quantities of ports of a single network interface card, or network interface card port rates. The network interface card connection statuses of the plurality of first servers includes being physically connected or not being connected to a physical switch. Satisfying the RDMA network configuration condition includes one or more of the network interface card connection statuses being connected to the physical switch, the quantities of the network interface cards being the same, the quantities of ports of the single network interface cards being the same, or the network interface card port rates being the same.

Optionally, the RDMA network configuration device further includes a display unit 904. The obtaining unit 901 is further configured to obtain device information of the plurality of second servers. The device information includes one or more of a device serial number, a universally unique identifier (UUID), or a device model. The display unit 904 is further configured to display a first interface. The first interface includes a first control. The first control is configured to instruct display of the device information of the plurality of second servers.

Optionally, the determining unit 902 is specifically configured to, in response to a first trigger operation on the first interface, determine the plurality of target servers from the plurality of second servers. The first trigger operation instructs determining at least some selected second servers to be the plurality of target servers.

Optionally, the display unit 904 is further configured to, in response to a second trigger operation on the first interface, display a second interface. The second interface includes a second control. The second control is configured to instruct display of a check item corresponding to the check result. The determining unit 902 is specifically configured to, in response to a third trigger operation on the second interface, based on the check item displayed as instructed by the second control, determine the check result of the network configuration information of the plurality of target servers.

Optionally, the sending unit 903 is specifically configured to, in a case where the check result indicates that the RDMA network configuration condition is satisfied, obtain configuration information of a distributed switch; the configuration information of the distributed switch includes a first configuration item, and the first configuration item is enabling the RDMA network; and send the network configuration instruction. The network configuration instruction includes the configuration information of the distributed switch. The network configuration instruction is configured to instruct creation of the distributed switch for the plurality of target servers based on the configuration information of the distributed switch.

Optionally, the sending unit 903 is specifically configured to, in a case where the check result indicates that the RDMA network configuration condition is satisfied, display a third interface, where the third interface includes a third control, the third control being configured to instruct display of the configuration information of the distributed switch; and based on the third control on the third interface, obtain the configuration information of the distributed switch.

Optionally, the third control includes a network control. The network control is configured to instruct display of a network type of a network interface card connected to the distributed switch. The network control instructs enabling of the RDMA network and disabling of an LACP network.

Optionally, the third control includes a network control. The network control is configured to instruct display of a network type of the network interface card connected to the distributed switch. The network control instructs enabling of the RDMA network.

Optionally, the third control includes a network control. The network control is configured to instruct display of a network type of a network interface card connected to the distributed switch. The network control instructs disabling of the LACP network.

Optionally, the configuration information of the distributed switch further includes route not based on IP hash. The third control includes a policy control. The policy control is configured to instruct display of a load balancing policy of the distributed switch. The policy control instructs the route not based on IP hash, and the policy control does not support selecting route based on IP hash.

Optionally, the configuration information of the distributed switch further includes route not based on IP hash. The third control includes a policy control. The policy control is configured to instruct display of a load balancing policy of the distributed switch. The policy control instructs the route not based on IP hash.

Optionally, the configuration information of the distributed switch further includes route not based on IP hash. The third control includes a policy control. The policy control is configured to instruct display of a load balancing policy of the distributed switch. The policy control does not support selecting route based on IP hash.

Optionally, the configuration information of the distributed switch includes an identifier of the distributed switch, an identifier of each uplink, a network interface card identifier and a network port identifier corresponding to each uplink, an identifier of each port group of the distributed switch, and a virtual machine identifier corresponding to each port group.

Optionally, the network configuration apparatus 900 may further include a display unit 904. The display unit 904 is configured to display a fourth interface. The fourth interface includes a fourth control. The fourth control is configured to instruct display of the check result.

Optionally, the fourth interface includes a fifth control. The fifth control is configured to instruct display of the network configuration information of the plurality of target servers.

For detailed descriptions of the above optional implementations, reference may be made to the above method embodiments, and details are not repeated here. In addition, for the explanation of the RDMA network configuration apparatus 900 and description of beneficial effects, reference may be made to the corresponding method embodiments, and details are not repeated here.

An embodiment of the present application further provides a server. The server includes a processor and a memory. The processor is connected to the memory. The memory stores a computer executable instruction, and when the processor executes the computer executable instruction, the RDMA network configuration method provided in the above embodiments is implemented.

An embodiment of the present application further provides a chip. The chip includes a processor and an interface circuit. The interface circuit is configured to receive a code instruction and transmit the code instruction to a processor. The processor is configured to run the code instruction to perform the RDMA network configuration method.

The chip integrates a control circuit configured to implement functions of the computer device and one or more ports. Optionally, for functions supported by the chip, reference may be made to the above description, and details are not repeated here. A person skilled in the art may understand that all or part of steps in the above embodiments may be accomplished by a program directing relevant hardware. The program may be stored in a computer-readable storage medium.

An embodiment of the present application further provides a computer-readable storage medium storing a computer program. When the computer program runs on a server, the server is caused to implement the any one RDMA network configuration method.

For explanations and beneficial effects of any of the above computer-readable storage medium, reference may be made to the above corresponding embodiments, and details are not repeated here.

The storage mediums mentioned above may be a read-only memory, a random-access memory, and the like. The processing unit or processor may be a central processing unit, a general-purpose processor, an application-specific integrated circuit (application specific integrated circuit, ASIC), a digital signal processor (digital signal processor, DSP), a field-programmable gate array (field programmable gate array, FPGA), or other programmable logic devices, transistor logic devices, hardware components, or any combination thereof.

An embodiment of the present application further provides a computer program product including a computer-executable instruction. When the computer-executable instruction runs on a server, the server performs the RDMA network configuration method.

It should be noted that devices provided in the embodiments of the present application configured to store the computer instruction or the computer program, such as but not limited to, the memory, the computer-readable storage medium, the communication chip, and the like, are all non-transitory (non-transitory).

The above embodiments may be implemented wholly or partly by software, hardware, firmware, or any combination thereof. When implemented using a software program, the embodiments may be realized in whole or in part in a form of the computer program product. The computer program product includes one or more computer instructions. When the computer program instruction is loaded and executed on a computer, processes or functions in the embodiments of the present application are generated in whole or in part. The computer may be a general-purpose computer, a special-purpose computer, a computer network, or another programmable device.

The computer instruction may be stored in a computer-readable storage medium or transmitted from one computer-readable storage medium to another. For example, the computer instruction may be transmitted from a website, computer, server, or data center to another website, computer, server, or data center through wired manners such as a coaxial line, an optical fiber, and a digital subscriber line (digital subscriber line, DSL), or wireless technologies such as infrared technology, radio technology and microwave technology. The computer-readable storage medium may be any available medium accessible to the computer, or a data storage device integrating one or more available media, such as a server or a data center. The available medium may be a magnetic medium such as a floppy drive, a drive, or a tape, an optical medium such as a DVD, or a semiconductor medium such as a solid state disk (solid state disk, SSD).

While the application has been described herein with various embodiments, other variations in the disclosed embodiments will be understood and realized by those skilled in the art by viewing the drawings, disclosure, and claims during the implementation of the claimed application. In the claims, the term "comprising" does not exclude other elements or steps, and "a" or "an" does not exclude a plurality. A single processor or a unit may implement several functions listed in the claims. Certain measures are noted in dependent claims that are different from each other, but it does not mean that these measures cannot be combined to produce good results.

Though the present application is described in combination with specific features and embodiments, obviously, various modifications and combinations may be made without departing from the spirit and scope of the present application. Accordingly, the specification and drawings are merely illustrative descriptions of the present application as defined by the appended claims and are deemed to cover any and all modifications, changes, combinations or equivalents within the scope of the present application. It is apparent that a person skilled in the art may make various modifications and variations of the present application without departing from the spirit and scope of the present application. Therefore, if these modifications and variations of the present application fall within the scope of the claims and equivalent technologies of the present application, the present application is intended to cover these modifications and variations.

## Claims

1. An RDMA network configuration method, applied to a configuration device, the method comprising:
obtaining network configuration information of a plurality of target servers;
determining a check result of the network configuration information of the plurality of target servers, wherein the check result is configured to indicate that the network configuration information satisfies an RDMA network configuration condition or does not satisfy an RDMA network configuration condition; and
in a case where the check result indicates that the RDMA network configuration condition is satisfied, sending a network configuration instruction, wherein the network configuration instruction is configured to instruct configuration of an RDMA network for the plurality of target servers.

2. The method according to claim 1, wherein the configuration device stores a target set, and network configuration information in the target set indicates that the RDMA network is supported; and determining the check result of the network configuration information of the plurality of target servers comprises:
in a case where the network configuration information of the plurality of target servers is the same, and the network configuration information of the plurality of target servers belongs to the target set, determining that the check result indicates that the RDMA network configuration condition is satisfied.

3. The method according to claim 2, wherein the network configuration information comprises a network interface card model, and the target set comprises a first set; and each network interface card model in the first set indicates that the RDMA network is supported; and in a case where the network configuration information of the plurality of target servers is the same, and the network configuration information of the plurality of target servers belongs to the target set, determining that the check result indicates that the RDMA network configuration condition is satisfied, comprises:
in a case where the network interface card models of the plurality of target servers are the same, and the network interface card models of the plurality of target servers belong to the first set, determining that the check result indicates that the RDMA network configuration condition is satisfied.

4. The method according to claim 2, wherein obtaining the network configuration information of the plurality of target servers comprises:
obtaining first network interface card information through a central processing unit of the target server, wherein the first network interface card information comprises first network interface card four-tuple information;
obtaining second network interface card information through an out-of-band controller of the target server, wherein the second network interface card information comprises second network interface card four-tuple information and a target network interface card model; and
in a case where the first network interface card four-tuple information is the same as the second network interface card four-tuple information, determining that a model of a network interface card corresponding to the first network interface card four-tuple information is the target network interface card model.

5. The method according to any one of claims 2 to 4, wherein the network configuration information comprises an operating system version number, and the target set comprises a second set; and each operating system version number in the second set indicates that the RDMA network is supported; and in a case where the network configuration information of the plurality of target servers is the same, and the network configuration information of the target servers belongs to the target set, determining that the check result indicates that the RDMA network configuration condition is satisfied, comprises:
in a case where operating system version numbers of the target servers are the same, and the operating system version numbers of the target servers belong to the second set, determining that the check result indicates that the RDMA network configuration condition is satisfied.

6. The method according to any one of claims 1 to 5, further comprising:
obtaining third network interface card information of a plurality of first servers;
based on the third network interface card information of the plurality of first servers, determining a plurality of second servers from the plurality of first servers, wherein third network interface card information of the plurality of second servers satisfies the RDMA network configuration condition; and
determining the plurality of target servers from the plurality of second servers.

7. The method according to claim 6, wherein determining the plurality of target servers from the plurality of second servers comprises:
obtaining device information of the plurality of second servers, wherein the device information comprises one or more of a device serial number, a universally unique identifier (UUID), or a device model;
displaying a first interface, wherein the first interface comprises a first control, the first control being configured to instruct display of the device information of the plurality of second servers; and
in response to a first trigger operation on the first interface, determining the plurality of target servers from the plurality of second servers, wherein the first trigger operation instructs determining at least some selected ones of the plurality of second servers to be the plurality of target servers.

8. The method according to any one of claims 1 to 7, wherein in a case where the check result indicates that the RDMA network configuration condition is satisfied, sending the network configuration instruction, comprises:
in a case where the check result indicates that the RDMA network configuration condition is satisfied, obtaining configuration information of a distributed switch, wherein the configuration information of the distributed switch comprises enabling the RDMA network; and
sending the network configuration instruction, wherein the network configuration instruction comprises the configuration information of the distributed switch, the network configuration instruction being configured to instruct creation of the distributed switch for the plurality of target servers based on the configuration information of the distributed switch.

9. The method according to claim 8, wherein in a case where the check result indicates that the RDMA network configuration condition is satisfied, obtaining the configuration information of the distributed switch, comprises:
in a case where the check result indicates that the RDMA network configuration condition is satisfied, displaying a third interface, wherein the third interface comprises a third control, the third control being configured to instruct display of the configuration information of the distributed switch; wherein the third control comprises a network control, the network control being configured to instruct display of a network type of a network interface card connected to the distributed switch, and the network control instructing enabling of the RDMA network and disabling of an LACP network; and
based on the third control on the third interface, obtaining the configuration information of the distributed switch.

10. A server, comprising a processor and a memory, wherein the processor is connected to the memory; the memory stores a computer program; and when the processor executes the computer program, the server implements the method according to any one of claims 1 to 9.
